# EUROPEAN PATENT APPLICATION

(11) **EP 1 223 557 A2**
(43) Date of publication of application: **17.07.2002**
(21) Application number: 01307991.8
(22) Date of filing: 19.09.2001
(51) Int. Cl.: G06T 7/20

(54) **Image interpolation method and apparatus therefor**

(30) Priority: 28.11.2000 JP 2000360601; 09.04.2001 JP 2001110392
(71) Applicant: Monolith Co., Ltd., Tokyo 106-0045 (JP)
(72) Inventor: Akiyoshi, Kozo, c/o Monolith Co. Ltd., Tokyo 106-0045 (JP); Akiyoshi, Nobuo, c/o Monolith Co. Ltd., Tokyo 106-0045 (JP); Shinagawa, Yoshihisa, c/o Monolith Co. Ltd., Tokyo 134-0088 (JP)
(74) Representative: Turner, James Arthur

(57) **Abstract**

An image inputting unit (12) inputs a first image and a second image. A matching processor (14) computes the pixel matching between those images, so that a corresponding point is obtained on the second image. An intermediate image generator (18) generates an intermediate image of the first image and the second image, based on the corresponding point file. In this case, however, the colors of the pixels on the first image are used as such without the color being interpolated between pixels. Thus, when interpolating, the first image alone suffices besides the corresponding point file.

## Description

The present invention relates to an image interpolation technique.

A very large number of users have come to get connected to the Internet utilizing portable telephones. Besides the normal telephone call usage, the portable telephone is mainly used for the Web services via the Internet and electronic mail services. In particular, to browse data, which can be transmitted and received on a text basis, such as the timetable and stock price, as well as to browse the Web pages specialized in the portable telephone use is becoming a typical usage of the portable telephones.

On the other hand, the color LCD is recently employed in the display unit of the portable telephone, and distribution of motion pictures in which relatively simple images are dominant is started. Thus, the motion pictures combined with normal texts can be utilized on the portable telephone, so that the portable telephones prepared primarily for audio usage at the outset are now becoming to establish a position of the first developed wearable computers.

However, the merchandise value of the portable telephones lies primarily in their light weight, long battery longevity, economical hardware, smooth operability and so forth, thus taking long time in downloading heavy image data is not desired. Moreover, the CPU power to process such heavy image data is disadvantageous in terms of the power consumed.

Various respective aspects and features of the invention are defined in the appended claims. Features from the dependent claims may be combined with features of the independent claims as appropriate and not merely as explicitly set out in the claims.

The present invention has been made in view of the foregoing circumstances and embodiments thereof can provide an image interpolation technique by which the motion pictures can be generated and displayed based on a small amount of image data.

The present invention relates to an image interpolation technique. This technique can utilize the image matching technique (referred to as the "base technology" hereinafter) proposed in the Japanese Patent No. 2927350 by the same inventors of the present patent application.

An embodiment according to the present invention relates to an image interpolation method. In this method, two images (that are, a first image and a second image hereinafter) are interpolated, and color data of both the images are referred to at a matching stage, so that, as a result, both the images are referred to as to the positions of pixels at an interpolation stage. However, at the same interpolation stage, only one of the images is referred to as to the color of the pixels. It is to be noted here that "points" and "pixels" will be used interchangeably so that the two are not distinct.

For example, suppose, as a result of the matching, that it is known that a point p₁ (x₁, y₁) of the first image corresponds to a point p₂ (x₂, y₂). Moreover, suppose that the colors or pixel values (simply referred to as color hereinafter) of these points are v₁ and v₂, respectively. In this case, an intermediate image of the first image and second image can be generated by interpolating the coordinates of these points. Namely, in the intermediate image, the position of a point (hereinafter referred to as an interpolation point) moved from the point p₁ is expressed in the following formula.${\text{((1-t)x}}_{\text{1}} {\text{+ tx}}_{\text{2}} {\text{, (1-t)y}}_{\text{1}} {\text{+ y}}_{\text{2}} \text{)}$ On the other hand, in the base technology the color of the interpolation point is set to${\text{(1-t)v}}_{\text{1}} {\text{+ tv}}_{\text{2}}$ by interpolating the color v₁ of the point p₁ of the first image and the color v₂ of the point p₂ of the second image in the similar manner.

However, the present invention is characterized by the feature that the interpolation computation is skipped as to the colors, and only one of the color v₁ of the first image point p₁ and the color v₂ of the second image point p₂ is adopted as the color for the interpolation point whereby the color adopted remains intact. Notice that if the both images are used as to the color in the course of performing the interpolation, then the data for the both images will be necessary. However, if only one of the images is to be used, only one of the images suffices. Thus, according to the present invention, the amount of data to be loaded into the memory at the time of performing the interpolation is significantly reduced, thus also reducing the data transmission time and power consumed. The interpolation processing becomes light, which is further advantageous in terms of power consumed. From a different point of view, the present invention realizes further high compression rate of the motion pictures.

Since the result of the matching is utilized for interpolating the positions, the both images are implicitly referred to. If the first image only is used for interpolating the colors, the intermediate image generated by the interpolation according to the present invention is such that each point of the first image is gradually moved using the original color and a state close to the second image is finally realized. It is to be noted that the colors of the second image can not be reproduced and the colors of the first image remain intact. Thus, for example, even in a case where the color tone of the second image is dark as a whole compared to that of the first image, the intermediate image does not become dark gradually but is generated reflecting the brightness of the first image as it is.

Another embodiment of the present invention is made to modify this point, and the points at which colors remain are selected from the first image and the second image in an average manner for the interpolation of the colors. For example, the color of the first image remains intact for the odd-number pixels while the color of the second image remains intact for the even-number pixels. Thus, the average-like colors for the first and second images can be adopted in advance for the entire image, so that the intermediate image provides natural colors. By implementing this method, the chance or situation in which the color changes abruptly and discontinuously at the second image can be reduced or best avoided.

Another embodiment of the present invention relates also to an image interpolation method. This method comprises: acquiring a first image and a second image; computing a matching between the first image and the second image acquired, and detecting a point on the second image which corresponds to a point on the first image; and interpolating the point on the first image and the point on the second image, wherein, in the interpolating step, a coordinate of the point on the first image and that of the point on the second image are effected in an interpolation computation, and the interpolation computation as to colors thereof is skipped, so that an original color of only one of the points is used as an interpolation result.

Still another embodiment of the present invention relates also to an image interpolation method. This method comprises: acquiring a corresponding point file which describes a first image, a second image and a matching result thereof; and generating an intermediate image of the first image and the second image by performing interpolation thereon based on the corresponding point file, wherein, in the generating step, a coordinate of the point on the first image and that of the point on the second image are effected in an interpolation computation, and the interpolation computation as to colors thereof is skipped, so that an original color of only one of the points is used as an interpolation result.

In any of the methods, the interpolation process requires the matching result that is the correspondence data on the pixel positions and only one of the first image and the second image, thus achieving the data reducing effect and other above-described effects.

Another embodiment of the present invention relates to an image interpolation apparatus. This apparatus includes: an image input unit which acquires a first image and a second image; a matching processor which computes a matching between the first image and the second image so that a point on the second image corresponding to a point on the first image is detected; and an intermediate image generator which generates an intermediate image by interpolating the point on the first image and that on the second image, wherein, in the intermediate image generator, a coordinate of the point on the first image and that of the point on the second image are effected in an interpolation computation, and the interpolation computation as to colors thereof is skipped, so that an original color of only one of the points is used as an interpolation result.

The matching processor may detect, by the image matching, points on the second image that corresponds to lattice points of a mesh provided on the first image, and based on the thus detected result a destination polygon corresponding to the second image may be defined on a source polygon that constitutes the mesh on the first image.

The matching processor may perform a pixel-by-pixel matching computation based on correspondence between a critical point detected through a two-dimensional search on the first image and a critical point detected through a two-dimensional search on the second image.

Moreover, the matching processor may multiresolutinalize the first image and the second image by respectively extracting the critical points, then may perform a pixel-by-pixel matching computation between same multiresolution levels, and may acquire a pixel-by-pixel correspondence relation in a most fine level of resolution at a final stage while inheriting a result of the pixel-by-pixel matching computation to a matching computation in a different multiresolution level.

Here, the matching method utilizing the critical points is an application of the base technology. However, the base technology does not touch on the features of the present invention relating to the lattice points or the polygons determined thereby. Introduction of a sort of such the simplified technique as the polygons in the present invention makes possible the significant reduction of the size of a file describing the correspondence relation between the first image and the second image (hereinafter referred to as a "corresponding point file").

Namely, in a case where the first and second images have n x m pixels respectively, there are caused (n x m)² combinations if their pixel-by-pixel correspondence is described as it is, so that the size of the corresponding point file will become extremely large. However, instead, this correspondence is modified by describing the correspondence relation between the lattice points or, substantially equivalently, the correspondence relation between polygons determined by the lattice points, so that the data amount is reduced significantly. Storage of the first or second image and the corresponding point file achieves reproduction of the motion pictures, thereby significantly improved effect is achieved in the transmission, storage and so forth of the motion pictures. As have been described, according to the present invention the storage of the first or second image suffices as to the image interpolation.

Another embodiment of the present invention relates to an image interpolation apparatus. This apparatus includes: a communication unit which acquires a corresponding point file which describes a first image, a second image and a matching result thereof; and an intermediate image generator which generates an intermediate image of the first image and the second image by performing interpolation thereon based on the corresponding point file, wherein, in the intermediate image generator, a coordinate of the point on the first image and that of the point on the second image are effected in an interpolation computation, and the interpolation computation as to colors thereof is skipped, so that an original color of only one of the points is used as an interpolation result. The communication unit is a functional block in general capable of receiving and transmitting data to and from an external unit.

The intermediate image generator may be such that the second image is not referred to and an original color of a point included in the first image is utilized as an interpolation result, or it may be such that that either of points of the first image or those of the second image are selected in a substantially averaged manner, and then colors of the thus selected points are used intact as an interpolation result.

It is to be noted that the base technology is not prerequisite for the present invention. Moreover, any arbitrary replacement or substitution of the above-described structural components and the steps, expressions replaced or substituted in part or whole between a method and an apparatus as well as addition thereof, and expressions changed to a computer program, recording medium or the like are all effective as and encompassed by the present invention.

Moreover, this summary of the invention does not necessarily describe all necessarily features so that the invention may also be sub-combination of these described features.

The invention will be now described by way of example with reference to the accompanying drawings, throughout which like parts are referred to by like references, and in which:
Fig. 1(a) is an image obtained as a result of the application of an averaging filter to a human facial image.
Fig. 1(b) is an image obtained as a result of the application of an averaging filter to another human facial image.
Fig. 1(c) is an image of a human face at p^{(5,0)} obtained in a preferred embodiment in the base technology.
Fig. 1(d) is another image of a human face at p^{(5,0)} obtained in a preferred embodiment in the base technology.
Fig. 1(e) is an image of a human face at p^{(5,1)} obtained in a preferred embodiment in the base technology.
Fig. 1(f) is another image of a human face at p^{(5,1)} obtained in a preferred embodiment in the base technology.
Fig. 1(g) is an image of a human face at p^{(5,2)} obtained in a preferred embodiment in the base technology.
Fig. 1(h) is another image of a human face at p^{(5,2)} obtained in a preferred embodiment in the base technology.
Fig. 1(i) is an image of a human face at p^{(5,3)} obtained in a preferred embodiment in the base technology.
Fig. 1(j) is another image of a human face at p^{(5,3)} obtained in a preferred embodiment in the base technology.
Fig. 2(R) shows an original quadrilateral.

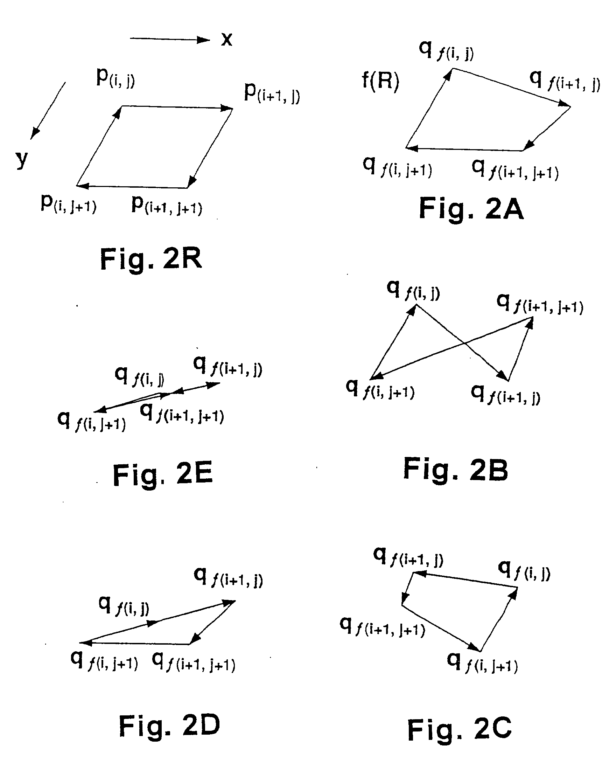

Fig. 2(A) shows an inherited quadrilateral.
Fig. 2(B) shows an inherited quadrilateral.
Fig. 2(C) shows an inherited quadrilateral.
Fig. 2(D) shows an inherited quadrilateral.
Fig. 2(E) shows an inherited quadrilateral.

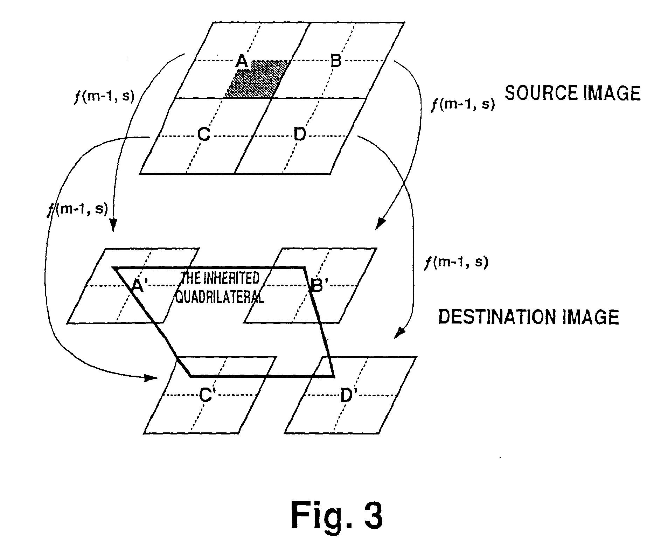

Fig. 3 is a diagram showing the relationship between a source image and a destination image and that between the m-th level and the (m-1)th level, using a quadrilateral.

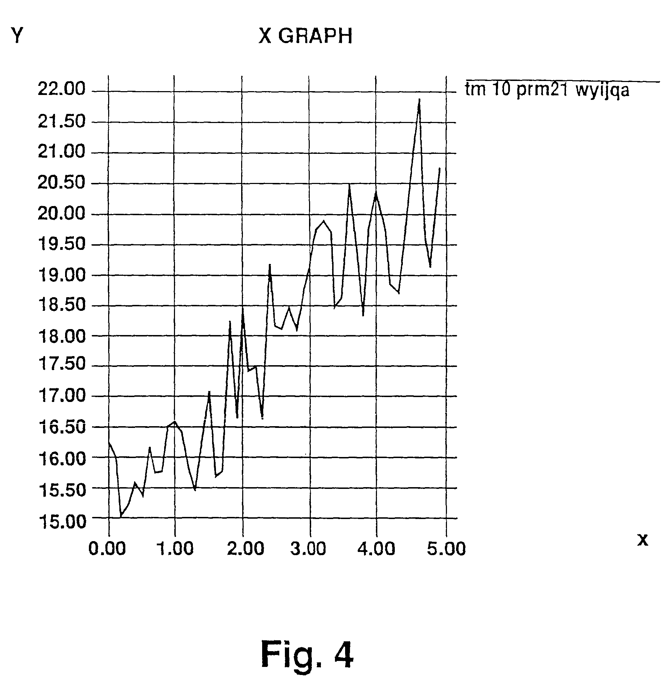

Fig. 4 shows the relationship between a parameter η (represented by x-axis) and energy C_{f} (represented by y-axis).

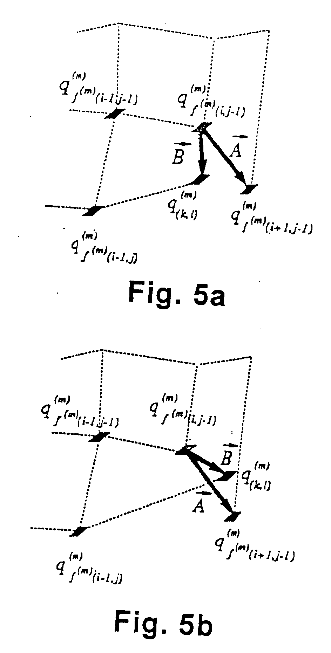

Fig. 5(a) is a diagram illustrating determination of whether or not the mapping for a certain point satisfies the bijectivity condition through the outer product computation.
Fig. 5(b) is a diagram illustrating determination of whether or not the mapping for a certain point satisfies the bijectivity condition through the outer product computation.

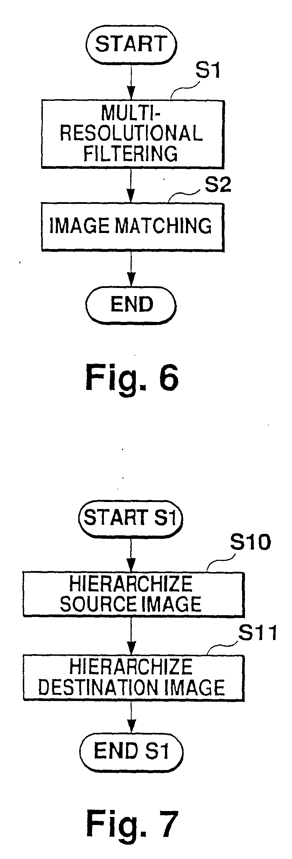

Fig. 6 is a flowchart of the entire procedure of a preferred embodiment in the base technology.
Fig. 7 is a flowchart showing the details of the process at S1 in Fig. 6.

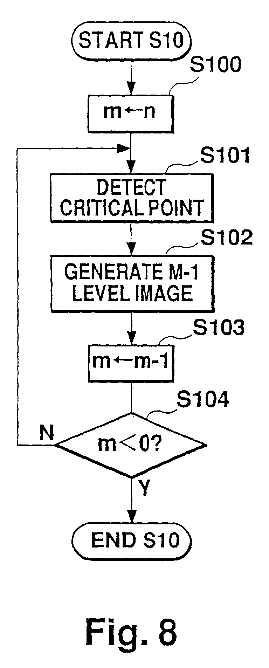

Fig. 8 is a flowchart showing the details of the process at S10 in Fig. 7.

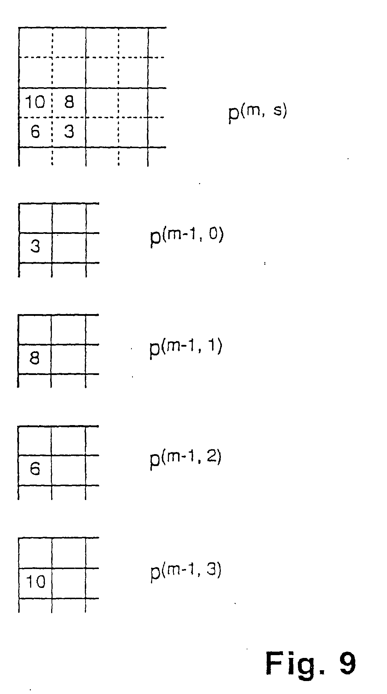

Fig. 9 is a diagram showing correspondence between partial images of the m-th and (m-1)th levels of resolution.

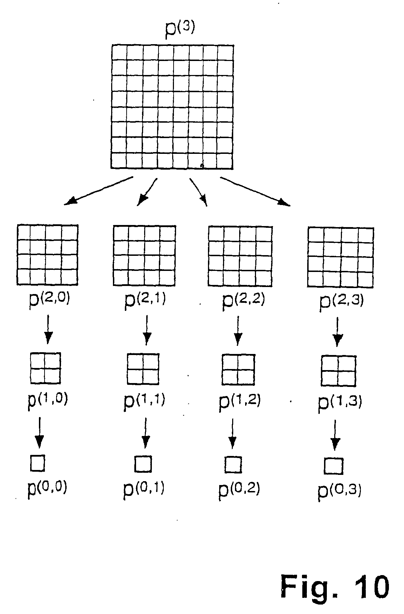

Fig. 10 is a diagram showing source images generated in the embodiment in the base technology.

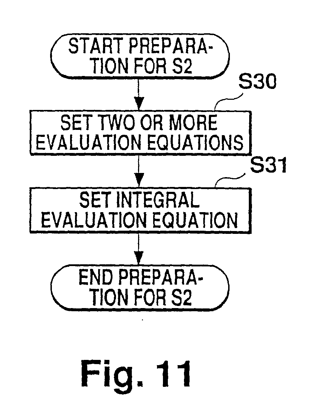

Fig. 11 is a flowchart of a preparation procedure for S2 in Fig. 6.

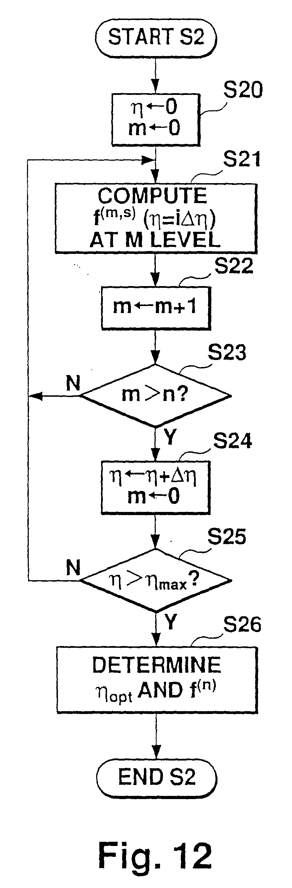

Fig. 12 is a flowchart showing the details of the process at S2 in Fig. 6.

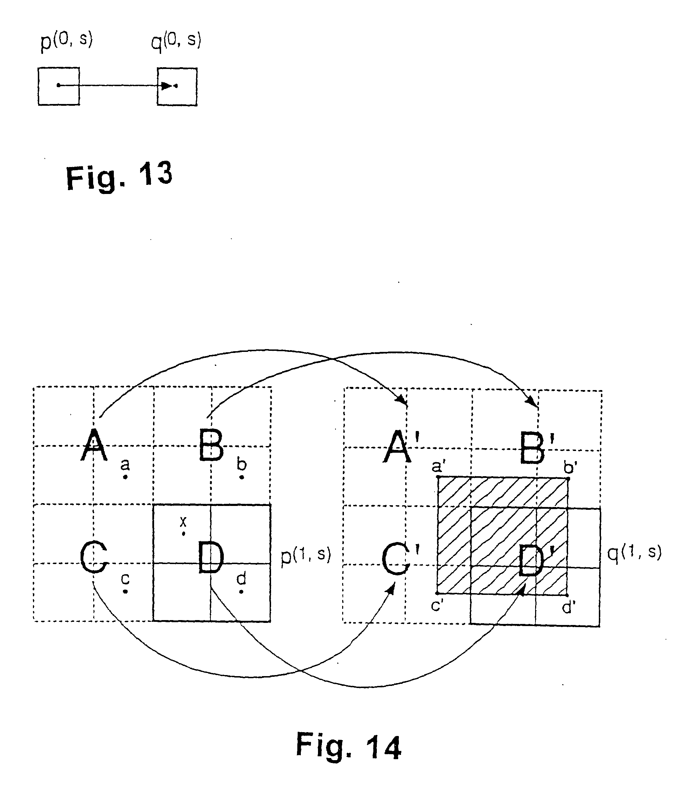

Fig. 13 is a diagram showing the way a submapping is determined at the 0-th level.
Fig. 14 is a diagram showing the way a submapping is determined at the first level.

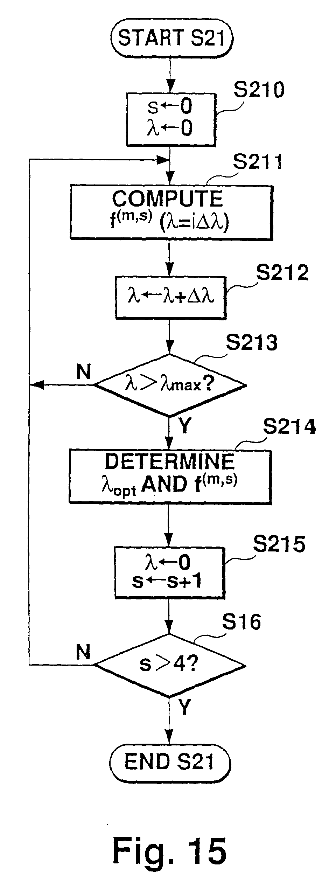

Fig. 15 is a flowchart showing the details of the process at S21 in Fig. 6.

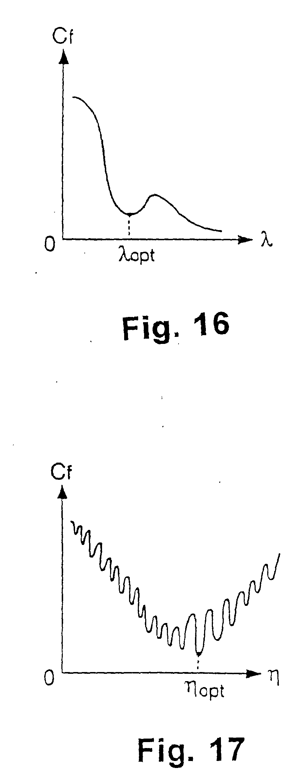

Fig. 16 is a graph showing the behavior of energy $\text{C} {\text{}}_{\text{f}}^{\left(\text{m,s}\right)}$ corresponding to f^{(m,s)} (λ = *i*Δλ) which has been obtained for a certain f^{(m,s)} while changing λ.
Fig. 17 is a diagram showing the behavior of energy $\text{C} {\text{}}_{\text{f}}^{\left(\text{n}\right)}$ corresponding to f⁽ⁿ⁾ (η = *i*Δη) (*i* = 0,1,...) which has been obtained while changing η.

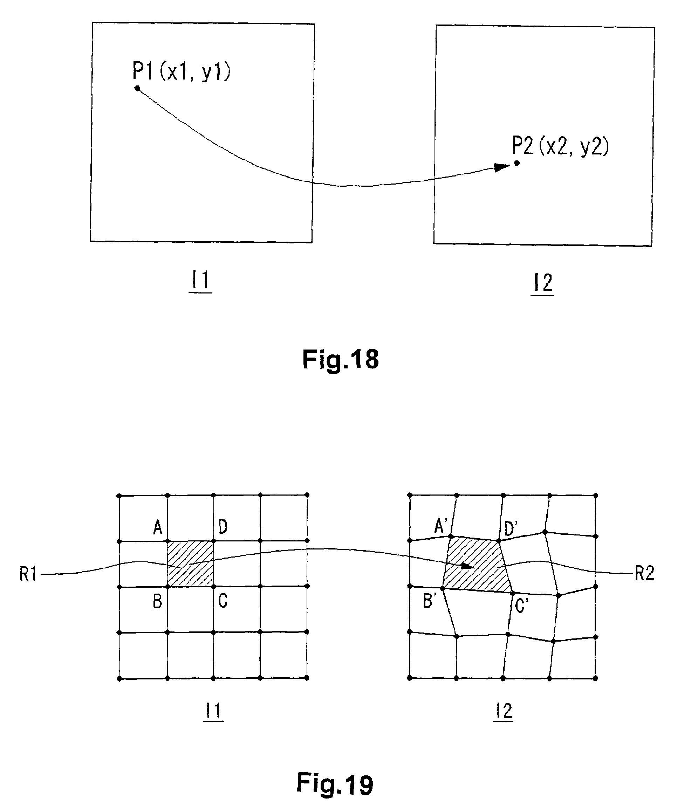

Fig. 18 shows how certain pixels correspond between the first image and the second image.
Fig. 19 shows a correspondence relation between a source polygon taken on the first image and a destination polygon taken on the second image.

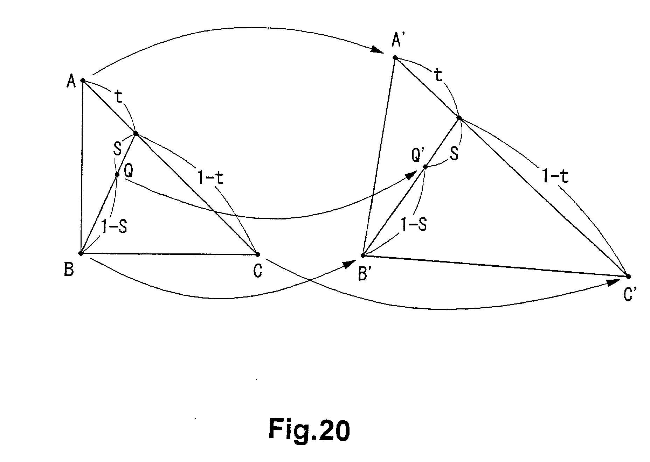

Fig. 20 shows a procedure by which to obtain points in the destination polygon corresponding to points in the source polygon.

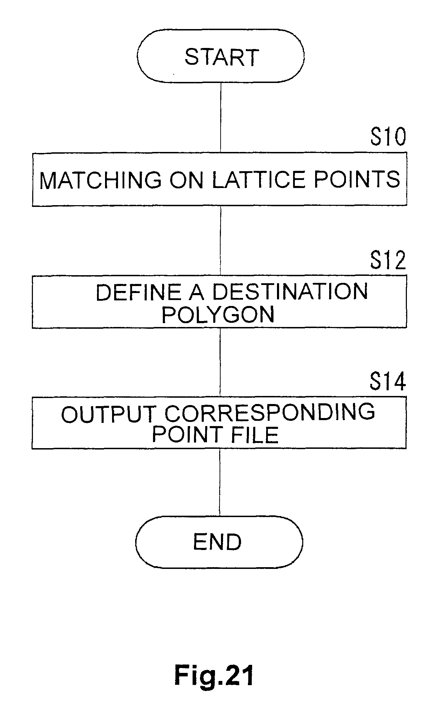

Fig. 21 is a flowchart showing a procedure for generating the corresponding point file according to a present embodiment.

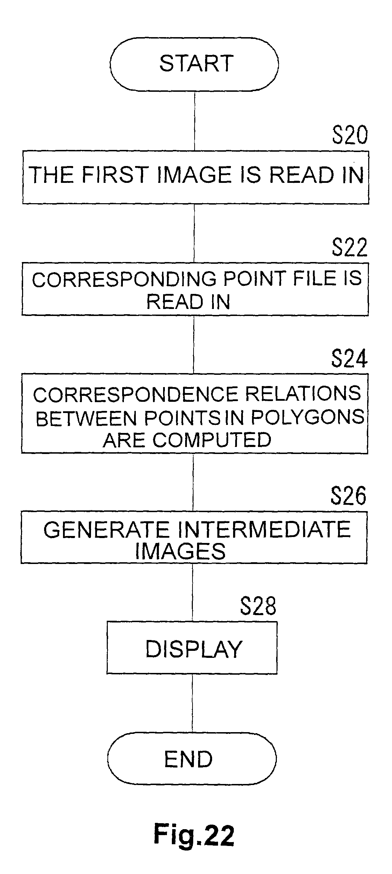

Fig. 22 is a flowchart showing a procedure for generating an intermediate image based on the corresponding point file.

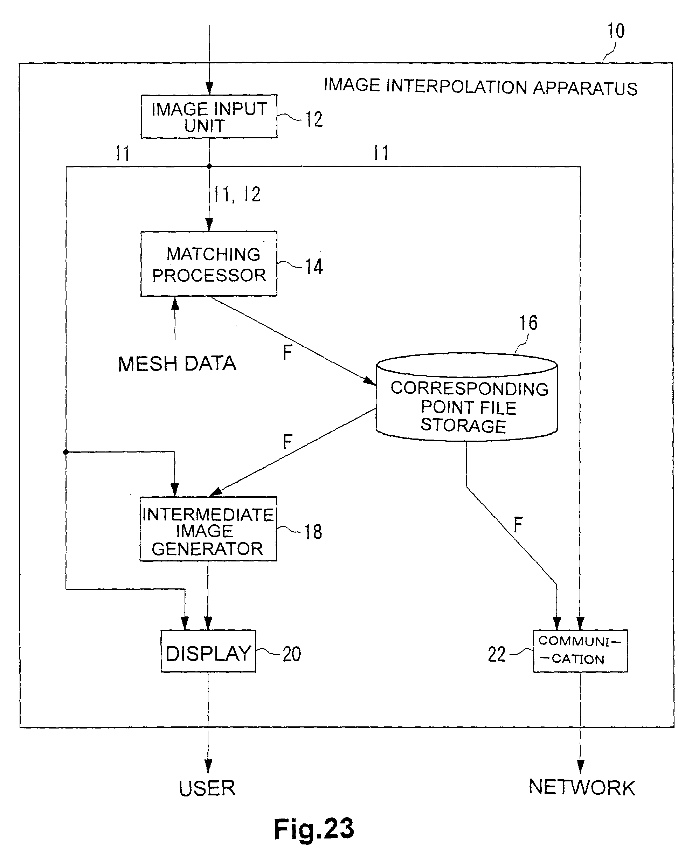

Fig. 23 shows a structure of an image interpolation apparatus according to a present embodiment.

The invention will now be described based on the preferred embodiments, which do not intend to limit the scope of the present invention, but exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections of [1] and [2] belong to the base technology, where [1] describes elemental techniques and [2] describes a processing procedure. These techniques are patented under Japanese Patent No. 2927350 and owned by the same inventors of the present invention, and they realize an optimal achievement when combined with the present invention. According to the present invention, there is provided a mesh on the image, so that lattice points thereof represent a plurality of pixels. Thus, application efficiency for such the pixel-by-pixel matching technique as in the base technology is naturally high. However, it is to be noted that the image matching techniques which can be adopted in the present embodiments are not limited to this. In Figs. 18 to 23, image interpolation techniques utilizing the base technology will be described in a specific manner.

### Base Technology

### [1] Detailed description of elemental techniques

### [1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

### [1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval [0, N] ⊂ R is denoted by I. A pixel of the image at position (i, j) is denoted by p^{(i,j)} where i,j ∈ I.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as 2^{m}X2^{m} (0 m n). A critical point filter constructs the following four new hierarchical images recursively, in the direction descending from n.$\text{p} {\text{}}_{\left(\text{i,j}\right)}^{\left(\text{m} \text{,0}\right)} \text{= min(min(} \text{p} {\text{}}_{\left(\text{2} \text{i,} \text{2} \text{j}\right)}^{\left(\text{m} \text{+1,0}\right)} \text{,} \text{p} {\text{}}_{\left(\text{2} \text{i,} \text{2} \text{j} \text{+1}\right)}^{\left(\text{m} \text{+1,0}\right)} \text{),min(} \text{p} {\text{}}_{\left(\text{2} \text{i} \text{+1} \text{,} \text{2} \text{j}\right)}^{\left(\text{m} \text{+1,0}\right)} \text{,} \text{p} {\text{}}_{\left(\text{2} \text{i} \text{+1} \text{,} \text{2} \text{j} \text{+1}\right)}^{\left(\text{m} \text{+1,0}\right)} \text{))}$$\text{p} {\text{}}_{\left(\text{i,j}\right)}^{\left(\text{m} \text{,1}\right)} \text{= max(min(} \text{p} {\text{}}_{\left(\text{2} \text{i,} \text{2} \text{j}\right)}^{\left(\text{m} \text{+1,1}\right)} \text{,} \text{p} {\text{}}_{\left(\text{2} \text{i,} \text{2} \text{j} \text{+1}\right)}^{\left(\text{m} \text{+1,1}\right)} \text{),min(} \text{p} {\text{}}_{\left(\text{2} \text{i} \text{+1} \text{,} \text{2} \text{j}\right)}^{\left(\text{m} \text{+1,1}\right)} \text{,} \text{p} {\text{}}_{\left(\text{2} \text{i} \text{+1} \text{,} \text{2} \text{j} \text{+1}\right)}^{\left(\text{m} \text{+1,1}\right)} \text{))}$$\text{p} {\text{}}_{\left(\text{i,j}\right)}^{\left(\text{m} \text{,2}\right)} \text{= min(max(} \text{p} {\text{}}_{\left(\text{2} \text{i,} \text{2} \text{j}\right)}^{\left(\text{m} \text{+1,2}\right)} \text{,} \text{p} {\text{}}_{\left(\text{2} \text{i,} \text{2} \text{j} \text{+1}\right)}^{\left(\text{m} \text{+1,2}\right)} \text{),max(} \text{p} {\text{}}_{\left(\text{2} \text{i} \text{+1} \text{,} \text{2} \text{j}\right)}^{\left(\text{m} \text{+1,2}\right)} \text{,} \text{p} {\text{}}_{\left(\text{2} \text{i} \text{+1} \text{,} \text{2} \text{j} \text{+1}\right)}^{\left(\text{m} \text{+1,2}\right)} \text{))}$$\text{p} {\text{}}_{\left(\text{i,j}\right)}^{\left(\text{m} \text{,3}\right)} \text{= max(max(} \text{p} {\text{}}_{\left(\text{2} \text{i,} \text{2} \text{j}\right)}^{\left(\text{m} \text{+1,3}\right)} \text{,} \text{p} {\text{}}_{\left(\text{2} \text{i,} \text{2} \text{j} \text{+1}\right)}^{\left(\text{m} \text{+1,3}\right)} \text{),max(} \text{p} {\text{}}_{\left(\text{2} \text{i} \text{+1} \text{,} \text{2} \text{j}\right)}^{\left(\text{m} \text{+1,3}\right)} \text{,} \text{p} {\text{}}_{\left(\text{2} \text{i} \text{+1} \text{,} \text{2} \text{j} \text{+1}\right)}^{\left(\text{m} \text{+1,3}\right)} \text{))}$ where let$\text{p} {\text{}}_{\left(\text{i,j}\right)}^{\left(\text{n} \text{,0}\right)} \text{=} \text{p} {\text{}}_{\left(\text{i,j}\right)}^{\left(\text{n} \text{,1}\right)} \text{=} \text{p} {\text{}}_{\left(\text{i,j}\right)}^{\left(\text{n} \text{,2}\right)} \text{=} \text{p} {\text{}}_{\left(\text{i,j}\right)}^{\left(\text{n} \text{,3}\right)} \text{=} {\text{p}}_{\text{(} \text{i,j} \text{)}}$

The above four images are referred to as subimages hereinafter. When min_{x≤t≤x+1} and max_{x≤t≤x+1} are abbreviated to and α and β, respectively, the subimages can be expressed as follows.${\text{P}}^{\text{(}} {\text{}}^{\text{m}} {\text{}}^{\text{,0)}} \text{= α(} \text{x} \text{)α(} \text{y} \text{)} {\text{p}}^{\text{(}} {\text{}}^{\text{m}} {\text{}}^{\text{+1,0)}}$${\text{P}}^{\text{(}} {\text{}}^{\text{m}} {\text{}}^{\text{,1)}} \text{= α(} \text{x} \text{)β(} \text{y} \text{)} {\text{p}}^{\text{(}} {\text{}}^{\text{m}} {\text{}}^{\text{+1,1)}}$${\text{P}}^{\text{(}} {\text{}}^{\text{m}} {\text{}}^{\text{,2)}} \text{= β(} \text{x} \text{)α(} \text{y} \text{)} {\text{p}}^{\text{(}} {\text{}}^{\text{m}} {\text{}}^{\text{+1,2)}}$${\text{P}}^{\text{(}} {\text{}}^{\text{m}} {\text{}}^{\text{,2)}} \text{= β(} \text{x} \text{)β(} \text{y} \text{)} {\text{p}}^{\text{(}} {\text{}}^{\text{m+}} {\text{}}^{\text{1,3)}}$

Namely, they can be considered analogous to the tensor products of α and β. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, α(x)α(y) preserves the local minimum point(minima point), β(x)β(y) preserves the local maximum point(maxima point), α(x)β(y) and β(x)α(y) preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using p^{(m,0)}. Next, the saddle points are matched using p^{(m,1)} based on the previous matching result for the minima points. Other saddle points are matched using p^{(m,2)}. Finally, the maxima points are matched using p^{(m,3)}.

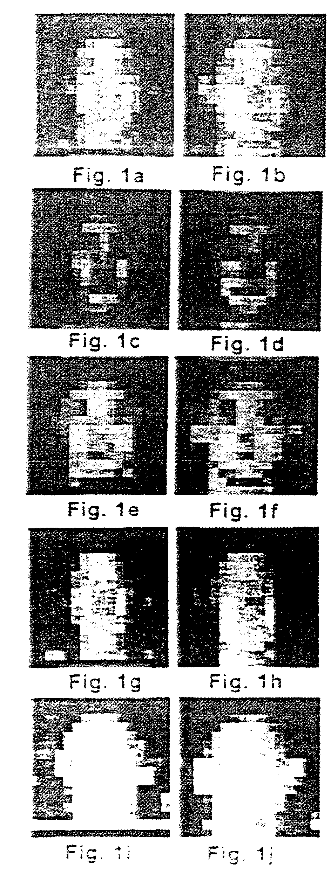

Figs. 1(c) and 1(d) show the subimages p^{(5,0)} of the images in Figs. 1(a) and 1(b), respectively. Similarly, Figs. 1(e) and 1(f) show the subimages p^{(5,1)}. Figs. 1(g) and 1(h) show the subimages p^{(5,2)}. Figs. 1(i) and 1(j) show the subimages p^{(5,3)}. Characteristic parts in the images can be easily matched using subimages. The eyes can be matched by p^{(5,0)} since the eyes are the minima points of pixel intensity in a face. The mouths can be matched by p^{(5,1)} since the mouths have low intensity in the horizontal direction. Vertical lines on the both sides of the necks become clear by p^{(5,2)}. The ears and bright parts of cheeks become clear by p^{(5,3)} since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

### [1.3] Computation of mapping between images

The pixel of the source image at the location (i,j) is denoted by $\text{p} {\text{}}_{\left(\text{i,j}\right)}^{\left(\text{n}\right)}$ and that of the destination image at (k,l) is denoted by $\text{q} {\text{}}_{\left(\text{k,l}\right)}^{\left(\text{n}\right)}$ where i, j, k, l ∈ I. The energy of the mapping between the images (described later) is then defined. This energy is determined by the difference in the intensity of the pixel of the source image and its corresponding pixel of the destination image and the smoothness of the mapping. First, the mapping f^{(m,0)}:p^{(m,0)} → q^{(m,0)} between p^{(m,0)} and q^{(m,0)} with the minimum energy is computed. Based on f^{(m,0)}, the mapping f^{(m,1)} between p^{(m,1)} and q^{(m,1)} with the minimum energy is computed. This process continues until f^{(m,3)} between p^{(m,3)} and q^{(m,3)} is computed. Each f^{(m,i)} (i = 0,1,2,...) is referred to as a submapping. The order of i will be rearranged as shown in the following (3) in computing f^{(m,i)} for the reasons to be described later. ${\text{ƒ}}^{\text{(}} {\text{}}^{\text{m,i}} {\text{}}^{\text{)}} \text{:} {\text{p}}^{\text{(}} {\text{}}^{\text{m}} {\text{}}^{\text{,σ(}} {\text{}}^{\text{i}} {\text{}}^{\text{))}} \text{→} {\text{q}}^{\text{(}} {\text{}}^{\text{m,σ}} {\text{}}^{\text{(}} {\text{}}^{\text{i}} {\text{}}^{\text{))}}$where σ (i) ∈ {0,1,2,3}.

### [1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by f^{(m,s)}: I/2^{n-m} X I/2^{n-m} → I/2^{n-m} X I/2^{n-m} (s = 0,1,...), where *f*$\frac{\text{(} \text{m,s} \text{)}}{\text{(} \text{i,j} \text{)}}$ = (*k,l*) means that *p*$\frac{\text{(} \text{m,s} \text{)}}{\text{(} \text{k,l} \text{)}}$ of the source image is mapped to *q*$\frac{\text{(} \text{m,s} \text{)}}{\text{(} \text{k,l} \text{)}}$ of the destination image. For simplicity, when f(i,j) = (k,l) holds, a pixel q_{(k,l)} is denoted by q_{f(i,j)}.

When the data sets are discrete as image pixels (grid points) treated in the base technology, the definition of bijectivity is important. Here, the bijection will be defined in the following manner, where i,i',j,j',k and l are all integers. First, each square region (4)$\text{p} {\text{}}_{\left(\text{i,j}\right)}^{\left(\text{m,s}\right)} \text{p} {\text{}}_{\left(\text{i} \text{+1} \text{,j}\right)}^{\left(\text{m,s}\right)} \text{p} {\text{}}_{\left(\text{i} \text{+1} \text{,j} \text{+1}\right)}^{\left(\text{m,s}\right)} \text{p} {\text{}}_{\left(\text{i,j} \text{+1}\right)}^{\left(\text{m,s}\right)}$ on the source image plane denoted by R is considered, where i = 0, ..., 2^{m}-1, and j = 0, ..., 2^{m}-1. The edges of R are directed as follows.

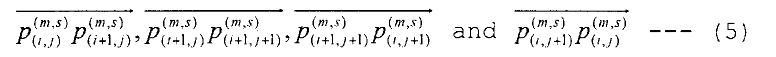

This square will be mapped by f to a quadrilateral on the destination image plane. The quadrilateral (6)$\text{q} {\text{}}_{\left(\text{i,j}\right)}^{\left(\text{m,s}\right)} \text{q} {\text{}}_{\left(\text{i} \text{+1} \text{,j}\right)}^{\left(\text{m,s}\right)} \text{q} {\text{}}_{\left(\text{i} \text{+1} \text{,j} \text{+1}\right)}^{\left(\text{m,s}\right)} \text{q} {\text{}}_{\left(\text{i,j} \text{+1}\right)}^{\left(\text{m,s}\right)}$ denoted by f^{(m,s)} (R) should satisfy the following bijectivity conditions (BC).$\text{(So,} {\text{f}}^{\text{(} \text{m,s} \text{)}} \text{(} \text{R} \text{) =} {\text{f}}^{\text{(} \text{m,s} \text{)}} \text{(} \text{p} {\text{}}_{\left(\text{i,j}\right)}^{\left(\text{m,s}\right)} \text{p} {\text{}}_{\left(\text{i} \text{+1} \text{,j}\right)}^{\left(\text{m,s}\right)} \text{p} {\text{}}_{\left(\text{i} \text{+1} \text{,j} \text{+1}\right)}^{\left(\text{m,s}\right)} \text{p} {\text{}}_{\left(\text{i,j} \text{+1}\right)}^{\left(\text{m,s}\right)} \text{=} \text{q} {\text{}}_{\left(\text{i,j}\right)}^{\left(\text{m,s}\right)} \text{q} {\text{}}_{\left(\text{i} \text{+1} \text{,j}\right)}^{\left(\text{m,s}\right)} \text{q} {\text{}}_{\left(\text{i} \text{+1} \text{,j} \text{+1}\right)}^{\left(\text{m,s}\right)} \text{q} {\text{}}_{\left(\text{i,j} \text{+1}\right)}^{\left(\text{m,s}\right)} \text{)}$
1. The edges of the quadrilateral f^{(m,s)} (R) should not intersect one another.
2. The orientation of the edges of f^{(m,s)} (R) should be the same as that of R (clockwise in the case of Fig. 2).
3. As a relaxed condition, retraction mapping is allowed.

The bijectivity conditions stated above shall be simply referred to as BC hereinafter.

Without a certain type of a relaxed condition, there would be no mappings which completely satisfy the BC other than a trivial identity mapping. Here, the length of a single edge of f^{(m,s)} (R) may be zero. Namely, f^{(m,s)} (R) may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.

In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=2^{m}-1, j=0, j=2^{m}-1). This condition will be hereinafter referred to as an additional condition.

### [1. 3. 2] Energy of mapping

### [1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy *C*$\frac{\text{(} \text{m,s} \text{)}}{\text{(} \text{i,j} \text{)}}$ of the mapping f^{(m,s)} at (i,j) is determined by the following equation (7). 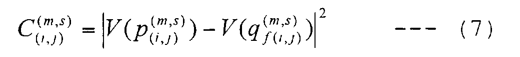 where *V*(*p*$\frac{\text{(} \text{m,s} \text{)}}{\text{(} \text{i,j} \text{)}}$) and *V*(*q*$\frac{\text{(} \text{m,s} \text{)}}{\text{f} \text{(} \text{i,j} \text{)}}$) are the intensity values of the pixels *p*$\frac{\text{(} \text{m,s} \text{)}}{\text{(} \text{i,j} \text{)}}$ and *q*$\frac{\text{(} \text{m,s} \text{)}}{\text{f} \text{(} \text{i,j} \text{)}}$, respectively. The total energy C^{(m,s)} of f is a matching evaluation equation, and can be defined as the sum of *C*$\frac{\text{(} \text{m,s} \text{)}}{\text{(} \text{i,j} \text{)}}$ as shown in the following equation (8).

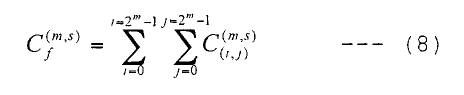

### [1. 3. 2. 2] Cost related to the locations of the pixel for smooth mapping

In order to obtain smooth mappings, another energy D_{f} for the mapping is introduced. The energy D_{f} is determined by the locations of *p*$\frac{\text{(} \text{m,s} \text{)}}{\text{(} \text{i,j} \text{)}}$ and *q*$\frac{\text{(} \text{m,s} \text{)}}{\text{f} \text{(} \text{i,j} \text{)}}$ (i=0, 1, ..., 2^{m}-1, j=0,1, ..., 2^{m}-1), regardless of the intensity of the pixels. The energy *D*$\frac{\text{(} \text{m,s} \text{)}}{\text{(} \text{i,j} \text{)}}$ of the mapping f^{(m,s)} at a point (i,j) is determined by the following equation (9).$\text{D} {\text{}}_{\left(\text{i,j}\right)}^{\left(\text{m,s}\right)} \text{= η} \text{E} {\text{}}_{\text{0} \left(\text{i,j}\right)}^{\left(\text{m,s}\right)} \text{+} \text{E} {\text{}}_{\text{1} \left(\text{i,j}\right)}^{\left(\text{m,s}\right)}$ where the coefficient parameter η which is equal to or greater than 0 is a real number. And we have 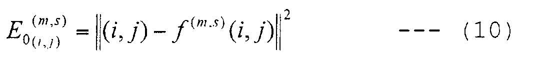 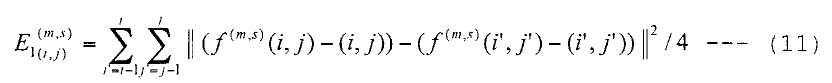 where ∥(*x,y*)∥ = $\sqrt{{\text{x}}^{\text{2}} \text{+} {\text{y}}^{\text{2}}}$ --- (12) and f(i',j') is defined to be zero for i'<0 and j'<0. E₀ is determined by the distance between (i,j) and f(i,j). E₀ prevents a pixel from being mapped to a pixel too far away from it. However, E₀ will be replaced later by another energy function. E₁ ensures the smoothness of the mapping. E₁ represents a distance between the displacement of p(i,j) and the displacement of its neighboring points. Based on the above consideration, another evaluation equation for evaluating the matching, or the energy D_{f} is determined by the following equation (13).

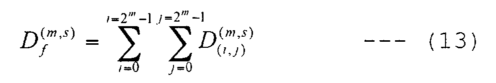

### [1. 3. 2. 3] Total energy of the mapping

The total energy of the mapping, that is, a combined evaluation equation which relates to the combination of a plurality of evaluations, is defined as λ*C*$\frac{\text{(} \text{m,s} \text{)}}{\text{(} \text{i,j} \text{)}}$ + *D*$\frac{\text{(} \text{m,s} \text{)}}{\text{f}}$ where λ ≧ 0 is a real number. The goal is to detect a state in which the combined evaluation equation has an extreme value, namely, to find a mapping which gives the minimum energy expressed by the following (14).

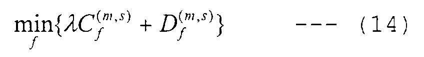

Care must be exercised in that the mapping becomes an identity mapping if λ=0 and η=0 (i.e., f^{(m,s)}(i,j)=(i,j) for all i=0,1,...,2^{m}-1 and j=0,1,...,2^{m}-1). As will be described later, the mapping can be gradually modified or transformed from an identity mapping since the case of λ=0 and η=0 is evaluated at the outset in the base technology. If the combined evaluation equation is defined as *C*$\frac{\text{(} \text{m,s} \text{)}}{\text{f}}$+ λ*D*$\frac{\text{(} \text{m,s} \text{)}}{\text{f}}$ where the original position of λ is changed as such, the equation with λ=0 and η=0 will be *C*$\frac{\text{(} \text{m,s} \text{)}}{\text{f}}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

### [1. 3. 3] Determining the mapping with multiresolution

A mapping fₘᵢₙ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds, 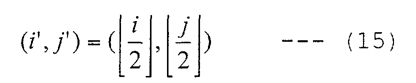 *p*$\frac{\text{(} \text{m} \text{-1,} \text{s} \text{)}}{\text{(} \text{i',j'} \text{)}}$ and *q*$\frac{\text{(} \text{m} \text{-1,} \text{s} \text{)}}{\text{(} \text{i',j'} \text{)}}$ are respectively called the parents of *p*$\frac{\text{(} \text{m,s} \text{)}}{\text{(} \text{i,j} \text{)}}$ and *q*$\frac{\text{(} \text{m,s} \text{)}}{\text{(} \text{i,j} \text{)}}$, where └*x*┘ denotes the largest integer not exceeding x. Conversely, *p*$\frac{\text{(} \text{m,s} \text{)}}{\text{(} \text{i,j} \text{)}}$ and *q*$\frac{\text{(} \text{m,s} \text{)}}{\text{(} \text{i,j} \text{)}}$ are the child of *p*$\frac{\text{(} \text{m} \text{-1,} \text{s} \text{)}}{\text{(} \text{i',j'} \text{)}}$ and the child of *q*$\frac{\text{(} \text{m} \text{-1,} \text{s} \text{)}}{\text{(} \text{i',j'} \text{)}}$ respectively. A function parent (i,j) is defined by the following (16).

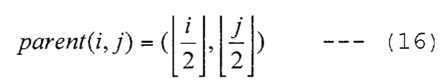

A mapping between *p*$\frac{\text{(} \text{m,s} \text{)}}{\text{(} \text{i,j} \text{)}}$ and *q*$\frac{\text{(} \text{m,s} \text{)}}{\text{(} \text{k,l} \text{)}}$ is determined by computing the energy and finding the minimum thereof. The value of f^{(m,s)} (i,j) = (k,l) is determined as follows using f(m-1,s) (m=1,2,..,n). First of all, imposed is a condition that *q*$\frac{\text{(} \text{m,s} \text{)}}{\text{(} \text{k,l} \text{)}}$ should lie inside a quadrilateral defined by the following (17) and (18). Then, the applicable mappings are narrowed down by selecting ones that are thought to be reasonable or natural among them satisfying the BC.$\text{q} {\text{}}_{\text{g} {\text{}}^{\left(\text{m,s}\right)} \left(\text{i} \text{-1,} \text{j} \text{-1}\right)}^{\left(\text{m,s}\right)} \text{q} {\text{}}_{\text{g} {\text{}}^{\left(\text{m,s}\right)} \left(\text{i} \text{-1,} \text{j} \text{+1}\right)}^{\left(\text{m,s}\right)} \text{q} {\text{}}_{\text{g} {\text{}}^{\left(\text{m,s}\right)} \left(\text{i} \text{+1,} \text{j} \text{+1}\right)}^{\left(\text{m,s}\right)} \text{q} {\text{}}_{\text{g} {\text{}}^{\left(\text{m,s}\right)} \left(\text{i} \text{+1,} \text{j-} \text{1}\right)}^{\left(\text{m,s}\right)}$ where${\text{g}}^{\text{(}} {\text{}}^{\text{m,s}} {\text{}}^{\text{)}} \text{(} \text{i,j} \text{) =} {\text{f}}^{\text{(}} {\text{}}^{\text{m}} {\text{}}^{\text{-1,}} {\text{}}^{\text{s}} {\text{}}^{\text{)}} \text{(} \text{parent} \text{(} \text{i,j} \text{))} {\text{+ f}}^{\text{(}} {\text{}}^{\text{m}} {\text{}}^{\text{-1,}} {\text{}}^{\text{s}} {\text{}}^{\text{)}} \text{(} \text{parent} \text{(} \text{i,j} \text{) + (1,1))}$

The quadrilateral defined above is hereinafter referred to as the inherited quadrilateral of *p*$\frac{\text{(} \text{m,s} \text{)}}{\text{(} \text{i,j} \text{)}}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel *p*$\frac{\text{(} \text{m,s} \text{)}}{\text{(} \text{i,j} \text{)}}$ should be mapped to the pixel *q*$\frac{\text{(} \text{m,s} \text{)}}{{\text{f}}^{\text{(} \text{m} \text{)}} \text{(} \text{i,j} \text{)}}$ which exists inside the inherited quadrilateral A'B'C'D'. Thereby, bridging from the mapping at the (m-1)th level to the mapping at the m-th level is achieved.

The energy E₀ defined above is now replaced by the following (19) and (20) 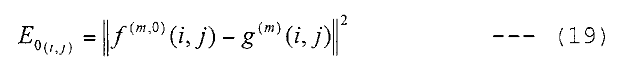 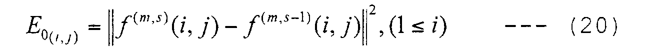 for computing the submapping f^{(m,0)} and the submapping f^{(m,s)} at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between f^{(m,s)}(i,j) and the location where (i,j) should be mapped when regarded as a part of a pixel at the (m-1) the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of f^{(m,s)} (i,j). L is increased until such a pixel is found or L reaches its upper bound *L*$\frac{\text{(} \text{m} \text{)}}{\text{max}}$. *L*$\frac{\text{(} \text{m} \text{)}}{\text{max}}$ is fixed for each level m. If no such a pixel is found at all, the third condition of the BC is ignored temporarily and such mappings that caused the area of the transformed quadrilateral to become zero (a point or a line) will be permitted so as to determine f^{(m,s)}(i,j). If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

### [1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, λ and η, where λ and η represent the weight of the difference of the pixel intensity and the stiffness of the mapping, respectively. The initial value for these parameters are 0. First, λ is gradually increased from λ=0 while η is fixed to 0. As λ becomes larger and the value of the combined evaluation equation (equation (14)) is minimized, the value of *C*$\frac{\text{(} \text{m,s} \text{)}}{\text{f}}$ for each submapping generally becomes smaller. This basically means that the two images are matched better. However, if λ exceeds the optimal value, the following phenomena (1 - 4) are caused.
1. Pixels which should not be corresponded are erroneously corresponded only because their intensities are close.
2. As a result, correspondence between images becomes inaccurate, and the mapping becomes invalid.
3. As a result, *D*$\frac{\text{(} \text{m,s} \text{)}}{\text{f}}$ in the equation 14 tends to increase abruptly.
4. As a result, since the value of the equation 14 tends to increase abruptly, f^{(m,s)} changes in order to suppress the abrupt increase of *D*$\frac{\text{(} \text{m,s} \text{)}}{\text{f}}$. As a result, *C*$\frac{\text{(} \text{m,s} \text{)}}{\text{f}}$ increases.

Therefore, a threshold value at which *C*$\frac{\text{(} \text{m,s} \text{)}}{\text{f}}$ turns to an increase from a decrease is detected while a state in which the equation (14) takes the minimum value with λ being increased is kept. Such λ is determined as the optimal value at η=0. Then, the behavior of *C*$\frac{\text{(} \text{m,s} \text{)}}{\text{f}}$ is examined while η is increased gradually, and η will be automatically determined by a method described later. λ will be determined corresponding to such the automatically determined η.

The above-described method resembles the focusing mechanism of human visual systems. In the human visual systems, the images of the respective right eye and left eye are matched while moving one eye. When the objects are clearly recognized, the moving eye is fixed.

### [1. 4. 1] Dynamic determination of λ

λ is increased from 0 at a certain interval, and the a subimage is evaluated each time the value of λ changes. As shown in the equation (14), the total energy is defined by *λC*$\frac{\text{(} \text{m,s} \text{)}}{\text{f}}$ + *D*$\frac{\text{(} \text{m,s} \text{)}}{\text{f}}$. *D*$\frac{\text{(} \text{m,s} \text{)}}{\text{i,j}}$ in the equation (9) represents the smoothness and theoretically becomes minimum when it is the identity mapping. E₀ and E₁ increase as the mapping is further distorted. Since E₁ is an integer, 1 is the smallest step of *D*$\frac{\text{(} \text{m,s} \text{)}}{\text{f}}$. Thus, that changing the mapping reduces the total energy is impossible unless a changed amount (reduction amount) of the current *λC*$\frac{\text{(} \text{m,s} \text{)}}{\text{i,j}}$ is equal to or greater than 1. Since *D*$\frac{\text{(} \text{m,s} \text{)}}{\text{f}}$ increases by more than 1 accompanied by the change of the mapping, the total energy is not reduced unless *λC*$\frac{\text{(} \text{m,s} \text{)}}{\text{i,j}}$ is reduced by more than 1.

Under this condition, it is shown that *C*$\frac{\text{(} \text{m,s} \text{)}}{\text{i,j}}$ decreases in normal cases as λ increases. The histogram of *C*$\frac{\text{(} \text{m,s} \text{)}}{\text{i,j}}$ is denoted as h(l), where h(l) is the number of pixels whose energy *C*$\frac{\text{(} \text{m,s} \text{)}}{\text{i,j}}$ is l². In order that λ l² ≧1, for example, the case of l²=1/λ is considered. When λ varies from λ₁ to λ₂, a number of pixels (denoted A) expressed by the following (21) 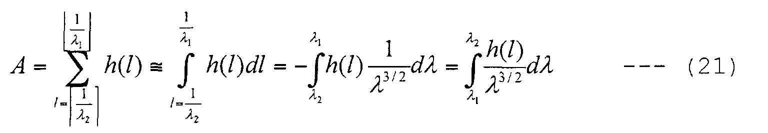 changes to a more stable state having the energy (22) which is$\text{C} {\text{}}_{\text{f}}^{\left(\text{m,s}\right)} \text{-} {\text{l}}^{\text{2}} \text{=} \text{CC} {\text{}}_{\text{f}}^{\left(\text{m,s}\right)} \text{-} \frac{\text{1}}{\text{λ}} \text{.}$

Here, it is assumed that all the energy of these pixels is approximated to be zero. It means that the value of *C*$\frac{\text{(} \text{m,s} \text{)}}{\text{i,j}}$ changes by (23).$\text{∂} \text{C} {\text{}}_{\text{f}}^{\left(\text{m,s}\right)} \text{= -} \frac{\text{A}}{\text{λ}}$ As a result, the equation (24) holds.$\frac{\text{∂} \text{C} {\text{}}_{\text{f}}^{\left(\text{m,s}\right)}}{\text{∂λ}} \text{= -} \frac{\text{h} \left(\text{l}\right)}{{\text{λ}}^{\text{5/2}}}$ Since h(l)>0, *C*$\frac{\text{(} \text{m,s} \text{)}}{\text{f}}$ decreases in normal case. However, when λ tends to exceed the optimal value, the above phenomenon that is characterized by the increase in *C*$\frac{\text{(} \text{m,s} \text{)}}{\text{f}}$ occurs. The optimal value of λ is determined by detecting this phenomenon.

When$\text{h} \text{(} \text{l} \text{) =} {\text{Hl}}^{\text{k}} \text{=} \frac{\text{H}}{{\text{λ}}^{\text{k} \text{/2}}}$ is assumed where both H(h>0) and k are constants, the equation (26) holds.$\frac{\text{∂} \text{C} {\text{}}_{\text{f}}^{\left(\text{m,s}\right)}}{\text{∂λ}} \text{= -} \frac{\text{H}}{{\text{λ}}^{\text{5/2+} \text{k} \text{/2}}}$ Then, if k≠-3, the following (27) holds.$\text{C} {\text{}}_{\text{f}}^{\left(\text{m,s}\right)} \text{=} \text{C} \text{+} \frac{\text{H}}{\left(\text{3/2 +} \text{k} \text{/2}\right) {\text{λ}}^{\text{3/2+} \text{k} \text{/2}}}$ The equation (27) is a general equation of *C*$\frac{\text{(} \text{m,s} \text{)}}{\text{f}}$ (where C is a constant).

When detecting the optimal value of λ, the number of pixels violating the BC may be examined for safety. In the course of determining a mapping for each pixel, the probability of violating the BC is assumed p₀ here. In that case, since$\frac{\text{∂} \text{A}}{\text{∂λ}} \text{=} \frac{\text{h} \left(\text{l}\right)}{{\text{λ}}^{\text{3/2}}}$ holds, the number of pixels violating the BC increases at a rate of the equation (29).${\text{B}}_{\text{0}} \text{=} \frac{\text{h} \left(\text{l}\right) {\text{p}}_{\text{0}}}{{\text{λ}}^{\text{3/2}}}$ Thus,$\frac{{\text{B}}_{\text{0}} {\text{λ}}^{\text{3/2}}}{{\text{p}}_{\text{0}} \text{h} \left(\text{l}\right)} \text{= 1}$ is a constant. If assumed that h(l)=Hl^{k}, the following (31), for example,${\text{B}}_{\text{0}} {\text{λ}}^{\text{3/2+}} {\text{}}^{\text{k}} {\text{}}^{\text{/2}} \text{=} {\text{p}}_{\text{0}} \text{H}$ becomes a constant. However, when λ exceeds the optimal value, the above value of (31) increases abruptly. By detecting this phenomenon, whether or not the value of *B*₀λ^{3/2+}^{*k*}^{/2}/2^{*m*} exceeds an abnormal value *B*₀ _{*thres*} exceeds is inspected, so that the optimal value of can be determined. Similarly, whether or not the value of *B*₁*λ*^{3/2+}^{*k*}^{/2}/2^{*m*} exceeds an abnormal value *B*₁_{*thres*}, so that the increasing rate B₁ of pixels violating the third condition of the BC is checked. The reason why the fact 2^{m} is introduced here will be described at a later stage. This system is not sensitive to the two threshold values *B*₀_{*thres*} and *B*₁_{*thres*}. The two threshold values *B*₀_{*thres*} and *B*₁_{*thres*} can be used to detect the excessive distortion of the mapping which is failed to be detected through the observation of the energy *C*$\frac{\text{(} \text{m,s} \text{)}}{\text{f}}$.

In the experimentation, the computation of f^{(m,s)} is stopped and then the computation of f^{(m, s+1)} is started when λ exceeded 0.1. That is because the computation of submappings is affected by the difference of mere 3 out of 255 levels in the pixel intensity when λ>0.1, and it is difficult to obtain a correct result when λ>0.1.

### [1. 4. 2] Histogram h(l)

The examination of *C*$\frac{\text{(} \text{m,s} \text{)}}{\text{f}}$ does not depend on the histogram h(l). The examination of the BC and its third condition may be affected by the h(l). k is usually close to 1 when (λ, *C*$\frac{\text{(} \text{m,s} \text{)}}{\text{f}}$ is actually plotted. In the experiment, k=1 is used, that is, *B*₀λ² and *B*₁λ² are examined. If the true value of k is less than 1, *B*₀λ² and *B*₁λ² does not become constants and increase gradually by the factor of λ⁽¹⁻^{*k*}^{)/2}. If h(l) is a constant, the factor is, for example, λ^{1/2}. However, such a difference can be absorbed by setting the threshold *B*₀_{*thres*} appropriately.

Let us model the source image by a circular object with its center at (x₀, y₀) and its radius r, given by: 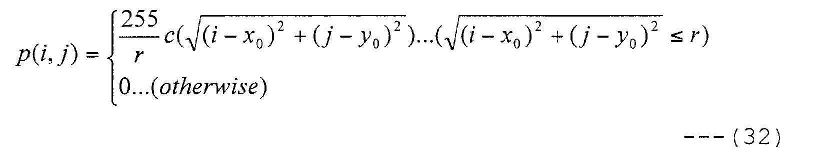 and the destination image given by: 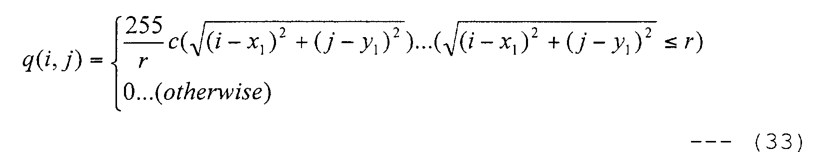 with its center at(x₁,y₁) and radius r. Let c(x) has the form of c(x)=x^{k}. When the centers (x₀,y₀) and (x₁,y₁) are sufficiently far from each other, the histogram h(l) is then in the form of:$\text{h} \text{(} \text{l} \text{) ∝} {\text{rl}}^{\text{k}} \text{(} \text{k} \text{≠ 0)}$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that -1≦k≦1 can cover the most cases, and it is guaranteed that the equation (27) is generally a decreasing function.

As can be observed from the above equation (34), attention must be directed to the fact that r is influenced by the resolution of the image, namely, r is proportional to 2^{m}. That is why the factor 2^{m} was introduced in the above section [1.4.1].

### [1. 4. 3] Dynamic determination of η

The parameter η can also be automatically determined in the same manner. Initially, η is set to zero, and the final mapping f⁽ⁿ⁾ and the energy *C*$\frac{\text{(} \text{n} \text{)}}{\text{f}}$ at the finest resolution are computed. Then, after η is increased by a certain value Δη and the final mapping f⁽ⁿ⁾ and the energy *C*$\frac{\text{(} \text{n} \text{)}}{\text{f}}$ at the finest resolution are again computed. This process is repeated until the optimal value is obtained. η represents the stiffness of the mapping because it is a weight of the following equation (35).

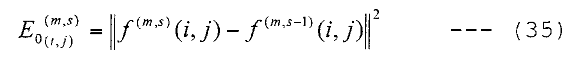

When η is zero, *D*$\frac{\text{(} \text{n} \text{)}}{\text{f}}$ is determined irrespective of the previous submapping, and the present submapping would be elastically deformed and become too distorted. On the other hand, when η is a very large value, *D*$\frac{\text{(} \text{n} \text{)}}{\text{f}}$ is almost completely determined by the immediately previous submapping. The submappings are then very stiff, and the pixels are mapped to almost the same locations. The resulting mapping is therefore the identity mapping. When the value of η increases from 0, *C*$\frac{\text{(} \text{n} \text{)}}{\text{f}}$ gradually decreases as will be described later. However, when the value of η exceeds the optimal value, the energy starts increasing as shown in Fig. 4. In Fig. 4, the x-axis represents η, and y-axis represents C_{f}.

The optimum value of η which minimizes *C*$\frac{\text{(} \text{n} \text{)}}{\text{f}}$ can be obtained in this manner. However, since various elements affects the computation compared to the case of λ, *C*$\frac{\text{(} \text{n} \text{)}}{\text{f}}$ changes while slightly fluctuating. This difference is caused because a submapping is re-computed once in the case of λ whenever an input changes slightly, whereas all the submappings must be re-computed in the case of η. Thus, whether the obtained value of *C*$\frac{\text{(} \text{n} \text{)}}{\text{f}}$ is the minimum or not cannot be judged instantly. When candidates for the minimum value are found, the true minimum needs to be searched by setting up further finer interval.

### [1. 5] Supersampling

When deciding the correspondence between the pixels, the range of f^{(m,s)} can be expanded to R X R (R being the set of real numbers) in order to increase the degree of freedom. In this case, the intensity of the pixels of the destination image is interpolated, so that f^{(m,s)} having the intensity at non-integer points$\text{V} \text{(} \text{q} {\text{}}_{\text{f} {\text{}}^{\left(\text{m,s}\right)} \left(\text{i,j}\right)}^{\left(\text{m,s}\right)} \text{)}$ is provided. Namely, supersampling is performed. In its actual implementation, f^{(m,s)} is allowed to take integer and half integer values, and$\text{V} \text{(} \text{q} {\text{}}_{\left(\text{i,j}\right) \text{+} \left(\text{0.5,0.5}\right)}^{\left(\text{m,s}\right)} \text{)}$ is given by$\text{(} \text{V} \text{(} \text{q} {\text{}}_{\left(\text{i,j}\right)}^{\left(\text{m,s}\right)} \text{)} \text{Vq} {\text{}}_{\left(\text{i,j}\right) \text{+} \left(\text{1,1}\right)}^{\left(\text{m,s}\right)} \text{))/2}$

### [1. 6] Normalization of the pixel intensity of each image

When the source and destination images contain quite different objects, the raw pixel intensity may not be used to compute the mapping because a large difference in the pixel intensity causes excessively large energy *C*$\frac{\text{(} \text{m,s} \text{)}}{\text{f}}$ relating the intensity, thus making it difficult to perform the correct evaluation.

For example, the matching between a human face and a cat's face is computed as shown in Figs. 20(a) and 20(b). The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

### [1. 7] Implementation

In the implementation, utilized is a heuristic method where the computation proceeds linearly as the source image is scanned. First, the value of f^{(m,s)} is determined at the top leftmost pixel (i,j)=(0,0). The value of each f^{(m,s)}(i,j) is then determined while i is increased by one at each step. When i reaches the width of the image, j is increased by one and i is reset to zero. Thereafter, f^{(m,s)}(i,j) is determined while scanning the source image. Once pixel correspondence is determined for all the points, it means that a single mapping f^{(m,s)} is determined.

When a corresponding point q_{f(i,j)} is determined for p_{(i,j)}, a corresponding point q_{f(i,j+1)} of p_{(i,j+1)} is determined next. The position of q_{f(i,j+1)} is constrained by the position of q_{f(i,j)} since the position of q_{f(i,j+1)} satisfies the BC. Thus, in this system, a point whose corresponding point is determined earlier is given higher priority. If the situation continues in which (0,0) is always given the highest priority, the final mapping might be unnecessarily biased. In order to avoid this bias, f^{(m,s)} is determined in the following manner in the base technology.

First, when (s mod 4) is 0, f^{(m,s)} is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, f^{(m,s)} is computed continuously in two directions on the assumption that s=0 and s=2.

In the actual implementation, the values of f^{(m,s)}(i,j) (m=0,...,n) that satisfy the BC are chosen as much as possible, from the candidates (k,l) by awarding a penalty to the candidates violating the BC. The energy D_{(k,l)} of the candidate that violates the third condition of the BC is multiplied by φ and that of a candidate that violates the first or second condition of the BC is multiplied by φ. In the actual implementation, φ=2 and φ=100000 are used.

In order to check the above-mentioned BC, the following test is performed as the actual procedure when determining (k,l)=f^{(m,s)}(i,j). Namely, for each grid point (k,l) in the inherited quadrilateral of f^{(m,s)}(i,j), whether or not the z-component of the outer product of 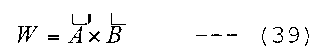 is equal to or greater than 0 is examined, where 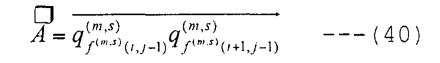 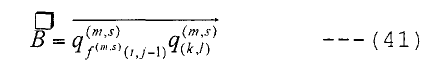 Here, the vectors are regarded as 3D vectors and the z-axis is defined in the orthogonal right-hand coordinate system. When W is negative, the candidate is awarded a penalty by multiplying *D*$\frac{\text{(} \text{m,s} \text{)}}{\text{(} \text{k,l} \text{)}}$ by φ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping f^{(m,s)}(i,j+1) for the adjacent pixel at (i,j+1), there is no pixel on the source image plane that satisfies the BC if the z-component of W is negative because then *q*$\frac{\text{(} \text{m,s} \text{)}}{\text{(} \text{k,l} \text{)}}$ passes the boundary of the adjacent quadrilateral.

### [1. 7. 1] The order of submappings

In the actual implementation, σ (0)=0, σ (1)=1, σ (2)=2, σ (3)=3, σ (4)=0 were used when the resolution level was even, while σ (0)=3, σ (1)=2, σ (2)=1, σ (3)=0, σ (4)=3 were used when the resolution level was odd. Thus, the submappings are shuffled in an approximately manner. It is to be noted that the submapping is primarily of four types, and s may be any one among 0 to 3. However, a processing with s=4 was actually performed for the reason described later.

### [1. 8] Interpolations

After the mapping between the source and destination images is determined, the intensity values of the corresponding pixels are interpolated. In the implementation, trilinear interpolation is used. Suppose that a square p_{(i,j)}p_{(i+1,j)}p_{(i+1,j+1)}p_{(i,j+1)} on the source image plane is mapped to a quadrilateral q_{f(i,j)}q_{f(i+1,j)}q_{f(i+1,j+1)}q_{f(i,j+1)} on the destination image plane. For simplicity, the distance between the image planes is assumed 1. The intermediate image pixels r(x,y,t) (0≦x≦N-1, 0≦y≦M-1) whose distance from the source image plane is t (0≦t≦1) are obtained as follows. First, the location of the pixel r(x,y,t), where x,y,t∈R, is determined by the equation (42). 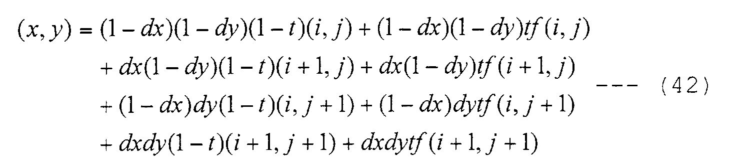 The value of the pixel intensity at r(x,y,t) is then determined by the equation (43).$\text{V} \text{(} \text{r} \text{(} \text{x,y,t} \text{)) = (1 -} \text{dx} \text{)(1 -} \text{dy} \text{)(1 -} \text{t} \text{)} \text{V} \text{(} {\text{p}}_{\text{(}} {\text{}}_{\text{i,j}} {\text{}}_{\text{)}} \text{) + (1 -} \text{dx} \text{)(1 -} \text{dy} \text{)} \text{tV} \text{(} {\text{q}}_{\text{f}} {\text{}}_{\text{(}} {\text{}}_{\text{i,j}} {\text{}}_{\text{)}} \text{)} \text{+} \text{dx} \text{(1 -} \text{dy} \text{)(1 -} \text{t} \text{)} \text{V} \text{(} {\text{p}}_{\text{(}} {\text{}}_{\text{i}} {\text{}}_{\text{+1,}} {\text{}}_{\text{j}} {\text{}}_{\text{)}} \text{) +} \text{dx} \text{(1 -} \text{dy} \text{)} \text{tV} \text{(} {\text{q}}_{\text{f}} {\text{}}_{\text{(}} {\text{}}_{\text{i}} {\text{}}_{\text{+1,}} {\text{}}_{\text{j}} {\text{}}_{\text{)}} \text{)} \text{+ (1 -} \text{dx} \text{)} \text{dy} \text{(1 -} \text{t} \text{)} \text{V} \text{(} {\text{p}}_{\text{(}} {\text{}}_{\text{i,j}} {\text{}}_{\text{+1)}} \text{) + (1 -} \text{dx} \text{)} \text{dytV} \text{(} {\text{q}}_{\text{f}} {\text{}}_{\text{(}} {\text{}}_{\text{i,j}} {\text{}}_{\text{+1)}} \text{)} \text{+} \text{dxdy} \text{(1 -} \text{t} \text{)} \text{V} \text{(} {\text{p}}_{\text{(}} {\text{}}_{\text{i}} {\text{}}_{\text{+1,}} {\text{}}_{\text{j}} {\text{}}_{\text{+1)}} \text{) +} \text{dxdytV} \text{(} {\text{q}}_{\text{f}} {\text{}}_{\text{(}} {\text{}}_{\text{i}} {\text{}}_{\text{+1,}} {\text{}}_{\text{j}} {\text{}}_{\text{+1)}} \text{)}$ where dx and dy are parameters varying from 0 to 1.

### [1. 9] Mapping to which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by F^{(m)}.

The approximate mapping F is determined in the following manner. First, the mapping for several pixels are specified. When nₛ pixels$\text{p} \text{(} {\text{i}}_{\text{0}} \text{,} {\text{j}}_{\text{0}} \text{),} \text{p} \text{(} {\text{i}}_{\text{1}} \text{,} {\text{j}}_{\text{1}} \text{),...,} \text{p} \text{(} \text{i} {\text{}}_{{\text{n}}_{\text{s}}} {\text{}}_{\text{-1}} \text{,} \text{j} {\text{}}_{{\text{n}}_{\text{s}}} {\text{}}_{\text{-1}} \text{)}$ of the source image are specified, the following values in the equation (45) are determined.

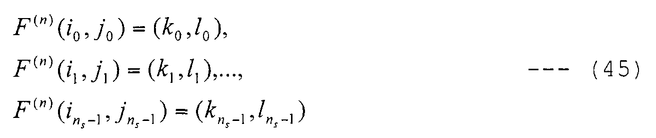

For the remaining pixels of the source image, the amount of displacement is the weighted average of the displacement of p(iₕ,jₕ) (h=0, ..., nₛ -1). Namely, a pixel p_{(i,j)} is mapped to the following pixel (expressed by the equation (46)) of the destination image. 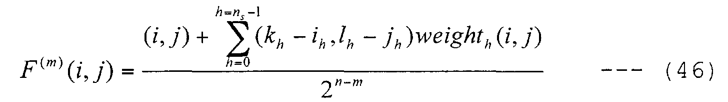 where 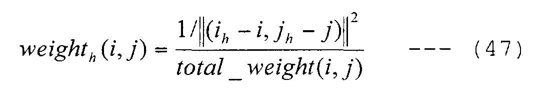 where

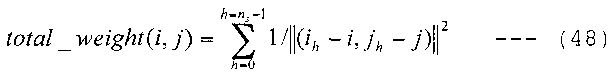

Second, the energy *D*$\frac{\text{(} \text{m,s} \text{)}}{\text{(} \text{i,j} \text{)}}$ of the candidate mapping f is changed so that mapping f similar to F^{(m)} has a lower energy. Precisely speaking, *D*$\frac{\text{(} \text{m,s} \text{)}}{\text{(} \text{i,j} \text{)}}$ is expressed by the equation (49).$\text{D} {\text{}}_{\left(\text{i,j}\right)}^{\left(\text{m,s}\right)} \text{=} \text{E} {\text{}}_{\text{0} {\text{}}_{\left(\text{i,j}\right)}}^{\left(\text{m.s}\right)} \text{+ η} \text{E} {\text{}}_{\text{1} {\text{}}_{\left(\text{i,j}\right)}}^{\left(\text{m.s}\right)} \text{+ κ} \text{E} {\text{}}_{\text{2} {\text{}}_{\left(\text{i,j}\right)}}^{\left(\text{m.s}\right)}$ 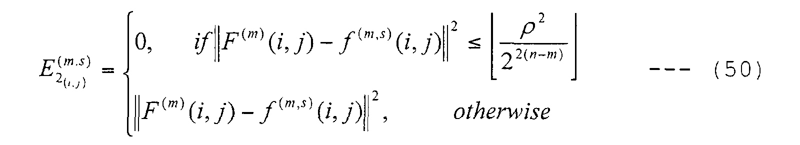 where κ,ρ ≧ 0. Finally, the mapping f is completely determined by the above-described automatic computing process of mappings.

Note that *E*$\frac{\text{(} \text{m,s} \text{)}}{{\text{2}}_{\text{(} \text{i,j} \text{)}}}$ becomes 0 if f^{(m,s)}(i,j) is sufficiently close to F^{(m)}(i,j) i.e., the distance therebetween is equal to or less than 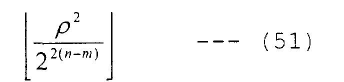 It is defined so because it is desirable to determine each value f^{(m,s)}(i,j) automatically to fit in an appropriate place in the destination image as long as each value f^{(m,s)}(i,j) is close to F^{(m)}(i,j). For this reason, there is no need to specify the precise correspondence in detail, and the source image is automatically mapped so that the source image matches the destination image.

### [2] Concrete Processing Procedure

The flow of the process utilizing the respective elemental techniques described in [1] will be described.

Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is 2ⁿX2ⁿ. Since source hierarchical images are sequentially generated from one with a finer resolution to one with a coarser resolution, the parameter m which indicates the level of resolution to be processed is set to n (S100). Then, critical points are detected from the images p^{(m,0)}, p^{(m,1)}, p^{(m,2)} and p^{(m,3)}of the m-th level of resolution, using a critical point filter (S101), so that the images p^{(m-1,0)}, p^{(m-1,1)}, p^{(m-1,2)} and p^{(m-1,3)} of the (m-1)th level are generated (S102). Since m=n here, p^{(m,0)} =p^{(m,1)} =p^{(m,2)} =p^{(m,3)} =p⁽ⁿ⁾ holds and four types of subimages are thus generated from a single source image.

Fig. 9 shows correspondence between partial images of the m-th and those of (m-1)th levels of resolution. Referring to Fig. 9, respective values represent the intensity of respective pixels. p^{(m,s)} symbolizes four images p(m,0) through p^{(m,3)}, and when generating p^{(m-1,0)}, p^{(m,s)} is regarded as p^{(m,0)}. For example, as for the block shown in Fig. 9, comprising four pixels with their pixel intensity values indicated inside, images p^{(m-1,0)}, p^{(m-1,1)}, p^{(m-1,2)} and p^{(m-1,3)} acquire "3", "8", "6" and "10", respectively, according to the rules described in [1.2]. This block at the m-th level is replaced at the (m-1)th level by respective single pixels acquired thus. Therefore, the size of the subimages at the (m-1)th level is 2^{m-1}X2^{m-1}.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy *C*$\frac{\text{(} \text{m,s} \text{)}}{\text{f}}$ concerning a pixel value, introduced in [1.3.2.1], and the energy *D*$\frac{\text{(} \text{m,s} \text{)}}{\text{f}}$ concerning the smoothness of the mapping introduced in [1.3.2.2]. Next, by combining these evaluation equations, a combined evaluation equation is set (S31). Such the combined evaluation equation includes λ*C*$\frac{\text{(} \text{m,s} \text{)}}{\text{(} \text{i,j} \text{)}}$ + *D*$\frac{\text{(} \text{m,s} \text{)}}{\text{f}}$. Using η introduced in [1.3.2.2], we have 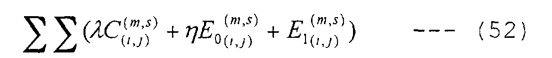 In the equation (52) the sum is taken for each i and j where i and j run through 0, 1,... , 2^{m -1}. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter η and a level parameter m are set to 0 (S20). Then, a matching is computed between respective four subimages at the m-th level of the source hierarchical images and those of the destination hierarchical images at the m-th level, so that four types of submappings f^{(m,s)} (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], f^{(m,3)}, f^{(m,2)} and f^{(m,1)} are respectively determined so as to be analogous to f^{(m,2)}, f^{(m,1)} and f^{(m,0)}. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for f^{(m,0)}, which is to be initially determined, a coarser level by one is referred to since there is no other submapping at the same level to be referred to as shown in the equation (19). In the experiment, however, a procedure is adopted such that after the submappings were obtained up to f^{(m,3)}, f^{(m,0)} is renewed once utilizing the thus obtained subamppings as a constraint. This procedure is equivalent to a process in which s=4 is substituted into the equation (20) and f^{(m,4)} is set to f^{(m,0)} anew. The above process is employed to avoid the tendency in which the degree of association between f^{(m,0)} and f^{(m,3)} becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings f^{(0,s)} is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in p^{(1,s)} is searched within q^{(1,s)}, the following procedure is adopted.
1. An upper left point a, an upper right point b, a lower left point c and a lower right point d with respect to the point x are obtained at the first level of resolution.
2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.
3. The corresponding points A' to D' of the pixels A to D, which have already been defined at the 0-th level, are plotted in q^{(1,s)}. The pixels A' to C' are virtual pixels and regarded to be located at the same positions as the pixels A to C.
4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.
5. The corresponding points b' to d' are plotted by using the same method as the above 4 so as to produce an inherited quadrilateral defined by the points a' to d'.
6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping f⁽ⁿ⁾ at the n-th level is determined. This mapping is denoted as f⁽ⁿ⁾ (η = 0) because it has been determined relative to η = 0.

Next, to obtain the mapping with respect to other different η, η is shifted by Δη and m is reset to zero (S24). After confirming that new η does not exceed a predetermined search-stop value ηₘₐₓ(S25), the process returns to S21 and the mapping f⁽ⁿ⁾ (η=Δη) relative to the new η is obtained. This process is repeated while obtaining f⁽ⁿ⁾(η=*i*Δη) (*i*=0,1,...) at S21. When η exceeds ηₘₐₓ, the process proceeds to S26 and the optimal η=ηₒₚₜ is determined using a method described later, so as to let f⁽ⁿ⁾ ( η=ηₒₚₜ) be the final mapping f⁽ⁿ⁾.

Fig. 15 is a flowchart showing the details of the process of S21 shown in Fig. 12. According to this flowchart, the submappings at the m-th level are determined for a certain predetermined η. When determining the mappings, the optimal λ is defined independently for each submapping in the base technology.

Referring to Fig. 15, s and λ are first reset to zero (S210). Then, obtained is the submapping f^{(m,s)} that minimizes the energy with respect to the then λ (and, implicitly, η) (S211), and the thus obtained is denoted as f^{(m,s)} (λ=0). In order to obtain the mapping with respect to other different λ, λ is shifted by Δλ. After confirming that new λ does not exceed a predetermined search-stop value λₘₐₓ (S213), the process returns to S211 and the mapping f^{(m,s)} (λ = Δλ) relative to the new λ is obtained. This process is repeated while obtaining f^{(m,s)} (λ = *i*Δλ) (*i* = 0,1,...). When λ exceeds λₘₐₓ, the process proceeds to S214 and the optimal λ = λₒₚₜ is determined , so as to let f⁽ⁿ⁾ (λ = λₒₚₜ) be the final mapping f^{(m,s)} (S214).

Next, in order to obtain other submappings at the same level, λ is reset to zero and s is incremented (S215). After confirming that s does not exceed 4 (S216), return to S211. When s=4, f^{(m,0)} is renewed utilizing f^{(m,3)} as described above and a submapping at that level is determined.

Fig. 16 shows the behavior of the energy *C*$\frac{\text{(} \text{m,s} \text{)}}{\text{f}}$ corresponding to f^{(m,s)} (λ = *i*Δλ) (*i* = 0,1,...) for a certain m and s while varying λ. Though described in [1.4], as λ increases, *C*$\frac{\text{(} \text{m,s} \text{)}}{\text{f}}$ normally decreases but changes to increase after λ exceeds the optimal value. In this base technology, λ in which *C*$\frac{\text{(} \text{m,s} \text{)}}{\text{f}}$ becomes the minima is defined as λₒₚₜ. As observed in Fig. 16, even if *C*$\frac{\text{(} \text{m,s} \text{)}}{\text{f}}$ urns to decrease again in the range λ > λₒₚₜ, the mapping will be spoiled by then and becomes meaningless. For this reason, it suffices to pay attention to the first occurring minima value. λₒₚₜ is independently determined for each submapping including f⁽ⁿ⁾.

Fig. 17 shows the behavior of the energy *C*$\frac{\text{(} \text{n} \text{)}}{\text{f}}$ corresponding to f⁽ⁿ⁾ (η = *i*Δη) (*i* = 0,1,...) while varying η. Here too, *C*$\frac{\text{(} \text{n} \text{)}}{\text{f}}$ normally decreases as η increases, but *C*$\frac{\text{(} \text{n} \text{)}}{\text{f}}$ changes to increase after η exceeds the optimal value. Thus, η in which *C*$\frac{\text{(} \text{n} \text{)}}{\text{f}}$ becomes the minima is defined as ηₒₚₜ. Fig. 17 can be considered as an enlarged graph around zero along the horizontal axis shown in Fig. 4. Once ηₒₚₜ is determined, f⁽ⁿ⁾ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:
(1) Parameters are automatically determined when the matching is computed between the source and destination hierarchical images in the base technology. This method can be applied not only to the calculation of the matching between the hierarchical images but also to computing the matching between two images in general.
   For instance, an energy E₀ relative to a difference in the intensity of pixels and an energy E₁ relative to a positional displacement of pixels between two images may be used as evaluation equations, and a linear sum of these equations, i.e., Eₜₒₜ=αE₀+E₁, may be used as a combined evaluation equation. While paying attention to the neighborhood of the extrema in this combined evaluation equation, α is automatically determined. Namely, mappings which minimize Eₜₒₜ are obtained for various α's. Among such mappings, α at which Eₜₒₜ takes the minimum value is defined as an optimal parameter. The mapping corresponding to this parameter is finally regarded as the optimal mapping between the two images.
   Many other methods are available in the course of setting up evaluation equations. For instance, a term which becomes larger as the evaluation result becomes more favorable, such as 1/E₁ and 1/E₂, may be employed. A combined evaluation equation is not necessarily a linear sum, but an n-powered sum (n=2, 1/2, -1, -2, etc.), a polynomial or an arbitrary function may be employed when appropriate.
   The system may employ a single parameter such as the above α, two parameters such as η and λ in the base technology or more than two parameters. When there are more than three parameters used, they are determined while changing one at a time.
(2) In the base technology, a parameter is determined in such a manner that a point at which the evaluation equation *C*$\frac{\text{(} \text{m,s} \text{)}}{\text{f}}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, αE₀+βE₁, for instance, may be taken up as the combined evaluation equation, where α+β=1 is imposed as a constraint so as to equally treat each evaluation equation. The essence of automatic determination of a parameter boils down to determining the parameter such that the energy becomes minimum.
(3) In the base technology, four types of submappings related to four types of critical points are generated at each level of resolution. However, one, two, or three types among the four types may be selectively used. For instance, if there exists only one bright point in an image, generation of hierarchical images based solely on f^{(m,3)} related to a maxima point can be effective to a certain degree. In this case, no other submapping is necessary at the same level, thus the amount of computation relative on s is effectively reduced.
(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.
(5) When the source and the destination images are color images, they are first converted to monochrome images, and the mappings are then computed. The source color images are then transformed by using the mappings thus obtained as a result thereof. As one of other methods, the submappings may be computed regarding each RGB component.

### Preferred Embodiments for Image Interpolation

The image interpolation techniques based on the above-described base technology will be described here. Firstly, efficient compression of a corresponding point file as a result of a mesh introduced will be described, and thereafter an image interpolation apparatus will be described with reference to Fig. 23.

Fig. 18 shows a first image I1 and a second image I2, which serve as key frames, where certain pixels p₁(x₁, y₁) and p₂(x₂, y₂) correspond therebetween. The correspondence of these is obtained in the base technology.

Referring to Fig. 19, when a mesh is provided on the first image I1, corresponding positions are shown on the second image I2 of a polygon which constitutes the mesh. Now, a polygon R1 aimed at on the first image I1 are determined by four lattice points A, B, C and D. This polygon R1 is called a "source polygon." As have been shown in Fig. 18, these lattice points A, B, C and D have respectively corresponding points A', B', C' and D' on the second image I2, and a polygon R2 formed thus by the corresponding points is called a "destination polygon." The source polygon is generally a rectangle while the destination polygon is generally a quadrilateral. In any event, according to the present embodiment, the correspondence relation between the first and second images is not described pixel by pixel, instead, the corresponding pixels are described with respect to the lattice points of the source polygon. Such a description is written in a corresponding point file. By directing attentions to the lattice points, a capacity for the corresponding point file can be reduced significantly.

The corresponding point file is utilized for generating an intermediate image of the first image I1 and the second image I2. As this was described in the base technology section, intermediate images at arbitrary temporal position can be generated by interpolating positions between the corresponding points. Thus, storing the first image I1, the second image I2 and the corresponding point file enables generating the morphing between two images and smooth motion pictures thereto, thus obtaining compression effect on the motion pictures.

Fig. 20 shows a method by which to compute the correspondence relation regarding points other than the lattice points, from the corresponding point file. Since in the corresponding point file there exit information on the lattice points only, data corresponding to interior points of the polygon need to be computed separately. Fig. 20 shows correspondence between a triangle ABC which corresponds to a lower half of the source polygon R1 shown in Fig. 19 and a triangle A'B'C' which corresponds to that of the destination polygon R2 shown in Fig. 19. Now, suppose that an interior point Q of the triangle ABC interior-divides the line segment AC in the ratio t:(1-t) and the point Q interior-divides a line segment connecting such the interior-divided point and a point B in the ratio s:(1-s). Thus, it may be thought of as in a manner that a corresponding point Q', which corresponds to the point Q, in a triangle A'B'C' in a destination polygon side interior-divides a line segment A'C', in the ratio t:(1-t) and the point Q' interior-divides a line segment connecting such the interior-divided point and a point B' corresponding to B in the ratio s:(1-s). Namely, it is preferable that the source polygon is divided into a triangle, and interior points of the destination polygon are determined in the forms of interior division of the vector concerning the triangle. When expressed in a vector skew field, it becomes$\text{BQ} \text{= (1-s) { (1-t)} \text{BA} \text{+ t} \text{BC} \text{},}$ thus, we have$\text{B'Q'} \text{= (1-s) { (1-t)} \text{B'A'} \text{+ t} \text{B'C'} \text{}}$

Of course, the similar processing will be performed on a triangle ACD which corresponds to an upper half of the source polygon R1 shown and a triangle A'C'D' which corresponds to that of the destination polygon R2.

Fig. 21 shows the above-described processing procedure. Firstly, the matching results on the lattice points taken on the first image I1 are acquired (S10) as shown in Fig. 19. Then, it is preferable that the pixel-by-pixel matching according to the base technology is performed, so that a portion corresponding to the lattice points is extracted from those results. It is to be noted that the matching results on the lattice points may be specified based on other matching techniques such as the optical flow and block matching, instead of using the base technology.

Thereafter, a destination polygon is defined on the second image I2 (S12), as shown in the right side of Fig. 19. Since the above procedure completes generation of the corresponding point file, data by which to identify the first image I1 are incorporated to this corresponding point file and are outputted therefrom (S14). Namely, instead of two images, only one of images is associated with the corresponding point data. The first image I1 and corresponding point file are stored in arbitrary recording device or medium, or may be transmitted directly via a network or broadcast wave.

Fig. 22 shows a procedure to generate intermediate images by using the corresponding point file. Firstly, the first image I1 only is read in (S20), and then the corresponding point file is read in (S22). Thereafter, the correspondence relation between points in the source polygon and those of the destination polygon is computed by a method shown in Fig. 20 (S24). At this time, the correspondence relation on all pixels within the image can be acquired. As described in the base technology, the coordinates and colors of points corresponding to each other are interior-divided in the ratio u:(1-u), so that an intermediate image in a position which interior-divides temporally in the ratio u:(1-u) between the first image I1 and the second image I2 can be generated (S26). However, different from the base technology, the colors are not interpolated, and the color of each pixel of the first image I1 is simply used as such without any alteration thereto. It is to be noted that not only the interpolation but also extrapolation may be performed.

Fig. 23 shows a structure of an image interpolation apparatus 10 which performs the above-described processing. The apparatus 10 includes: an image input unit 12 which acquires the first image I1 and second image I2 from an external storage, a photographing camera and so forth; a matching processor 14 which performs a matching computation on these images using the base technology or other technique, a corresponding point file storage 16 which stores the corresponding point file F generated by the matching processor 14, an intermediate image generator 18 which generates an intermediate image from the first image I1 and the corresponding point file F, and a display unit 20 which displays the first image I1 and the intermediate image as images close to the original motion picture by adjusting the timing thereof. It is to be noted that the display unit 20 may display the second image I2 in the end of the display. Moreover, a communication unit 22 sends out the first image I1 and the corresponding point file F to a transmission infrastructure such as a network or others according to a request from an external side. Then, the second image I2 may be sent out too. It is to be noted that mesh data, which indicate the size of the mesh, the positions of the lattice points and so forth, are being inputted in the matching processor 14.

By implementing the above-described structure, the first image I1 and the second image I2 which were inputted in the image input unit 12 are sent to the matching processor 14. The matching processor 14 performs pixel-by-pixel matching computation in between images. Namely, both the images are referred to at the matching stage. The matching processor 14 generates the corresponding point file F based on the mesh data, and the thus generated file F is outputted to the corresponding point file storage 16.

The intermediate image generator 18 reads out the corresponding point file F upon request from a user or due to other factors, and generates an intermediate image. At this interpolation stage, the color data on one of the two images are utilized. This intermediate image is sent to the display unit 20, where the time adjustment of image output is performed, so that motion pictures or morphing images are displayed. As evident from this operation, the intermediate image generator 18 and the display unit 20 may be provided in a remote terminal which is separated from the apparatus 10, and in that case the terminal can receive relatively light data comprised of the first image I1 and the corresponding point file F and can independently reproduce the motion pictures.

The communication unit 22 is structured and provided accordingly on the assumption that there is provided a remote terminal, and the communication unit 22 sends out the first image I1 and the corresponding point file F via a network or broadcast wave, so that motion pictures can be displayed at the remote terminal side. Of course, the remote terminal may be provided for the purpose of storage instead of display.

Actual experiment was carried out according to the processing contents of the present embodiments. For example, the size of 256 X 256 or a similar size thereto is adopted as those of the first image and second image, and satisfactory morphing or satisfactory motion picture compression effect is obtained by setting the lattice points at intervals of 10 to some tens of pixels in the vertical and horizontal directions. The size of the corresponding point file is of some kilo to 10 kilo bytes or so, and it is confirmed that high image quality and smallness of the data amount are achieved.

Moreover, since an intermediate image leading to the second image I2 can be generated from the first image I1 and the corresponding point file F, the present embodiments are advantageous in terms of the data streamlining. In a case where the second image I2 is being awaited, a processing which goes back to the previous intermediate image after the second image I2 has been acquired is needed. In contrast to this case, the present embodiments do not need such the processing.

In the present embodiments, the first image I1 only is used when interpolating the color. More specifically, each pixel of the first image I1 is moved to the corresponding pixel on the second image I2. When doing so, the color data are not interpolated between the corresponding pixels, but simply the color of the first image I1 is used. However, the pixel of color on the second image I2 in the destination side may be used, or the pixel on the first image I1 and the pixel on the second image I2 may be adopted alternately pixel by pixel or block by block and those colors may be utilized alternately. In that case, the first image I1 and the second image I2 are blended from the outset, so that an intermediate-like image of both images can be smoothly generated.

Moreover, though the present embodiments have been described in the recognition where they are advantageous for terminals such as portable phones and the like, the present invention can be applied to arbitrary image related equipment in general.

Although the present invention has been described by way of exemplary embodiments, it should be understood that many changes and substitutions may be made by those skilled in the art without departing from the scope of the present invention which is defined by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An image interpolation apparatus (10) **characterised in that** it comprises:
a communication unit (12) which acquires a corresponding point file which describes a first image, a second image and a matching result thereof; and
an intermediate image generator (18) which generates an intermediate image of the first image and the second image by performing interpolation thereon based on the corresponding point file,
wherein, in said intermediate image generator (18), a coordinate of the point on the first image and that of the point on the second image are effected in an interpolation computation, and the interpolation computation as to colors thereof is skipped, so that an original color of only one of the points is used as an interpolation result.

2. An image interpolation apparatus according to Claim 1, further comprising a display unit (20) which displays at least the intermediate image.

3. An image interpolation apparatus according to any one of Claims 1 and 2, further comprising a corresponding point file storage (16) which records in a manner such that the corresponding point file is associated to the first image.

4. An image interpolation apparatus according to any one of Claims 1 to 3, wherein said intermediate image generator (18) is such that the second image is not referred to and an original color of a point included in the first image is utilized as an interpolation result.

5. An image interpolation apparatus according to any one of Claims 1 to 3, wherein said intermediate image generator (18) is such that either of points of the first image or those of the second image are selected in a substantially averaged manner, and then colors of the thus selected points are used intact as an interpolation result.

6. An image interpolation apparatus according to Claim 5, wherein a pixel of the first image and a pixel of the second image are selected alternately, so that a color thereof is used alternately.

7. An image interpolation method, **characterised in that** it comprises:
acquiring a matching result computed between a first image and a second image; and
varying a position of a pixel included in the first image by incorporating the matching result into the first image, and generating an intermediate image of the first image and the second image without referring to the second image at this stage.

8. Computer software having program code for carrying out a method according to Claim 7.

9. A providing medium by which software according to Claim 8 is provided.

10. A medium according to Claim 9, the medium being a storage medium.
